# EUROPÄISCHE PATENTSCHRIFT

(11) **EP 1 151 020 B1**
(45) Veröffentlichungstag und Bekanntmachung des Hinweises auf die Patenterteilung: **12.02.2003**
(21) Anmeldenummer: 99964599.7
(22) Anmeldetag: 17.12.1999
(51) Int. Cl.: C08F 283/00, C08G 18/08, C08G 18/36, C09D 175/04

(54) **SELBSTVERNETZENDE POLYURETHAN-POLYMER-HYBRID-DISPERSION**
SELF-CROSSLINKING POLYURETHANE POLYMER HYBRID DISPERSION
DISPERSION HYBRIDE POLYURETHANNE-POLYMERE AUTORETICULANTE

(30) Priorität: 18.12.1998 DE 19858554
(43) Veröffentlichungstag der Anmeldung: 07.11.2001
(73) Patentinhaber: Degussa Construction Chemicals GmbH, 83308 Trostberg (DE)
(72) Erfinder: INGRISCH, Stefan, D-83358 Seebruck (DE); MAIER, Alois, D-84549 Engelsberg (DE); WOLFERTSTETTER, Franz, D-83349 Palling (DE); WINKELMANN, Herbert, D-84518 Garching (DE); KERN, Alfred, D-84558 Kirchweidach (DE); WEICHMANN, Josef, D-84568 Pleiskirchen (DE)
(74) Vertreter: Weiss, Wolfgang, Dipl.-Chem. Dr.
(86) Internationale Anmeldenummer: EP9910080
(87) Internationale Veröffentlichungsnummer: WO00037518

(56) Entgegenhaltungen:
- EP-A- 0 308 115
- EP-A- 0 444 454
- EP-A- 0 742 239
- EP-A- 0 841 357

## Beschreibung

Die vorliegende Erfindung betrifft eine wäßrige selbstvernetzende Polyurethan-Polymer-Hybrid-Dispersion auf Basis von oxidativ trocknenden Polyolen mit sehr hoher Filmhärte und guter Chemikalienbeständigkeit, ein Verfahren zu ihrer Herstellung sowie deren Verwendung als Bindemittel für ein- oder zweikomponentige Lacke, Versiegelungen, Verklebungen und Beschichtungen.

Beschichtungssysteme auf Basis von wäßrigen Polyurethan-Dispersionen und Polyurethan-Polymer-Hybrid-Dispersionen haben aufgrund ihrer guten Eigenschaften wie Haftung auf unterschiedlichen Substraten, Abriebfestigkeit sowie Flexibilität und Zähigkeit in den letzten Jahren zunehmend an Bedeutung erlangt.

Für zahlreiche bauchemische Anwendungen, bei denen neben hoher Härte auch eine gute Chemikalienresistenz gewünscht wird, ist eine Kombination von physikalischer und chemischer Trocknung interessant. Solche Eigenschaften weisen z.B. die Alkydharze auf. Alkydharze sind öl- bzw. fettsäuremodifizierte Polykondensate bzw. Polyester aus Polycarbonsäuren bzw. Polycarbonsäureanhydriden und Polyalkoholen. Sie stellen aufgrund ihrer breiten Variationsmöglichkeit hinsichtlich Aufbau und Zusammensetzung, aber auch in Bezug auf ihre universelle Anwendbarkeit, eine bedeutende Gruppe synthetischer Lackbindemittel dar.

Als Rohstoffe dienen natürliche Triglyceride (Öle, Fette) oder definierte synthetische Fettsäuren. Das Eigenschaftsprofil der Alkydharze läßt sich durch die Art und Menge der enthaltenen langkettigen Fettsäuren bzw. Öle variieren. Je nach Grad der Ungesättigtheit unterscheidet man zwischen trocknenden, halb-trocknenden und nicht-trocknenden Fettsäuren bzw. Ölen. Je nach Gehalt an Ölen unterscheidet man zwischen kurzöligen, mittelöligen und langöligen Alkydharzen.

Die Aushärtung von trocknenden Alkydharzen beruht auf einer intermolekularen Vernetzung der Doppelbindungen der ungesättigten Fettsäuren. Diese Polymerisation wird durch Autooxidationsvorgänge eingeleitet (sog. Autoxypolymerisation). Zur katalytischen Beschleunigung der autoxidativen Trocknung und Filmbildung können den Alkydharzen Aktiv- und Hilfstrockenstoffe bzw. Siccative zugesetzt werden, bei denen es sich im allgemeinen um Metallsalze organischer Säuren handelt.

Alkydharze können mit anderen Komponenten wie Polyisocyanaten, Polyolen, Phenolharzen, Epoxiden etc. zu Polyurethanalkydharzen umgesetzt werden. Bei dieser Reaktion werden hydroxylgruppenhaltige, langölige Alkydharze mit Polyisocyanaten in geeigneten organischen Solventien umgesetzt, bis keine freien Isocyanatgruppen mehr vorhanden sind. Diese lösemittelhaltigen Urethanalkyde sind insbesondere für hochwertige Beschichtungen, Grundierungen, Lacke, Versiegelungen geeignet und zeichnen sich durch rasche Trocknung, hohe Härte, ausgezeichnete mechanische Wiederstandsfähigkeit, sehr gute Abriebfestigkeit, hohe Wasserfestigkeit und verbesserte Chemikalienbeständigkeit aus.

Fettsäuremodifizierte, oxidativtrocknende Polyurethan-Dispersionen stellen synergistische Kombinationen aus Alkydharzen und Polyurethanharzen dar, die das exzellente Eigenschaftsprofil beider Typen von Polymeren in sich vereinigen. Diese selbstvernetzenden wäßrigen Polyurethan-Dispersionen können lösemittelfrei (zero VOC) oder lösemittelarm (low VOC) hergestellt werden und sind demgemäß deutlich umweltfreundlicher als konventionelle lösemittelhaltige Urethanalkyde.

Die Herstellung von wäßrigen Polyurethanen ist seit vielen Jahren bekannt und wird in einer großen Zahl von Veröffentlichungen im Detail beschrieben, z.B. Houben-Weyl, Methoden der organischen Chemie, Band E 20, Teil I, S. 1659-1681; D. Dieterich, Prog. Org. Coat. 1981, 9, 281-330; J. W. Rosthauser, K. Nachtkamp, Journal Of Coated Fabrics 1986, 16, 39-79; R. Arnoldus, Surf. Coat. 1990, 3 (Waterborne Coat.), 179-98.

Die im Vergleich zu Polyurethan-Dispersionen kostengünstigeren Polyurethan-Polymer-Hybrid-Dispersionen eignen sich insbesondere zur Lackierung, Beschichtung, Versiegelung und Verklebung der Oberflächen von metallischen und mineralischen Substraten sowie von Holzwerkstoffen und Kunststoffen.

Die Polyurethan-Polymer-Hybrid-Dispersionen stellen synergistische Kombinationen aus reinen Polyurethan-Dispersionen und reinen Kunststoff-Dispersionen dar, deren Eigenschaftsprofil durch ein einfaches Abmischen der beiden Typen von Dispersionen nicht erreicht werden kann. Polyurethan-Polymer-Hybrid-Dispersionen basieren auf sich durchdringenden Netzwerken aus Polyurethan-Polymeren und Acrylat-Polymeren, die sowohl physikalisch als auch chemisch miteinander verknüpft sein können. Dieser Typ von Dispersionen erfordert spezielle Synthesemethoden.

Fettsäuremodifizierte, oxidativ trocknende Polyurethan-Polymer-Hybrid-Dispersionen werden in einer Polyurethan-Dispersion als Matrix durch eine Art Emulsionspolymerisation von Acrylat- und Styrolderivaten modifiziert. Dadurch lassen sich die exzellenten Eigenschaften einer oxidativ trocknenden Polyurethan-Dispersion mit dem Kostenvorteil einer Kunststoffdispersion synergistisch kombinieren.

Reine Polyurethan-Dispersionen sind für zahlreiche bauchemische Anwendungen zu teuer. Daher werden in den Polyurethan-Polymer-Hybrid-Dispersionen die vorteilhaften Eigenschaften der reinen Polyurethan-Dispersionen mit dem Kostenvorteil der reinen Kunststoff-Dispersionen vereint. Aus diesen Gründen gewinnen die kostengünstigeren Polyurethan-Polymer-Hybrid-Dispersionen gegenüber herkömmlichen Polyurethan-Dispersionen in bauchemischen Anwendungen immer mehr an Bedeutung.

Auch im Hinblick auf die Einhaltung bestehender und zukünftiger Emissionsrichtlinien wurden in den letzten Jahren erhebliche Anstrengungen zur Entwicklung von wasserbasierenden Polyurethan-Polymer-Hybrid-Dispersionen mit einem möglichst geringen Gehalt an flüchtigen organischen Lösemitteln (VOC, volatile organic compounds) unternommen. Diese lösemittelarmen (low VOC) oder lösemittelfreien (zero VOC) Produkte bieten sowohl ökologische als auch ökonomische Vorteile und entsprechen in ihrer Performance und ihren Materialeigenschaften bereits weitgehend konventionellen Polyurethan-Systemen.

In der Bauchemie werden aus Kostengründen insbesondere selbstvernetzende Polyurethan-Polymer-Hybrid-Dispersionen mitsehr hoher Härte und guter Chemikalienresistenz gewünscht, die mit Hilfe von rationellen und zugleich universellen Herstellungsverfahren zugänglich gemacht werden können.

Die aus der einschlägigen Patentliteratur bekannten Hybrid-Systeme weisen noch eine Reihe von Nachteilen auf, die einen Ersatz von Polyurethan-Dispersionen in bestimmten Anwendungsgebieten einschränken.

So sind bekannte Herstellungsverfahren von Polyurethan-Polymer-Hybrid-Dispersionen wie z.B. in den Schriften EP 0 649 865 A1, EP 0 657 483 A1, EP O 742 239 A1 und US 5,521,246 beschrieben, sind bezüglich der synthetischen Verfahrensweise sehr aufwendig.

Aus der Patentanmeldung EP 0 649 865 A1 ist ein Verfahren bekannt, bei dem während der Polyol-Isocyanatreaktion ein Teil der Acrylat-Komponente zur Prepolymer-Lösung gegeben wird. Der zweite Teil der Acrylat-Komponente wird zu einem späteren Zeitpunkt zudosiert und der letzte Teil vor der Dispergierung zur Prepolymer-Lösung zugegeben.

Gemäß der Patentanmeldung EP 0 657 483 A1 wird die Acrylat-Komponente in mehreren Schritten bereits während der Polyurethan-Prepolymer-synthese bei 70°C zudosiert. Dem Polyurethan-Acrylat-Prepolymer wird dann vor der Dispergierung in Wasser nochmals ein Teil der Acrylat-Komponente zugefügt und die Initiator-Komponente anschließend bei 80°C in organischem Lösemittel gelöst oder in Substanz zugegeben.

Die US-Patentschrift 5,521,246 beschreibt ein ähnliches Verfahren, bei dem die Acrylat-Komponente ebenfalls während der Polyurethan-Prepolymersynthese bei 75°C schrittweise zugegeben wird. Nach der Neutralisation bei 25°C und der Dispergierung in Wasser wird die Initiator-Komponente, gelöst in N-Methylpyrrotidon, zugeführt. Anschließend erst erfolgt die Kettenverlängerung mit Ethylendiamin und der letzte Teil der Acrylat-Komponente wird zur Dispersion zugegeben. Die Polymerisation wird für 2 bis 3 Stunden bei einer Temperatur von 65°C durchgeführt. Veröffentlichungen zur Polymerisation von Acrylaten mit 2,2'-Azoisobutyronitril belegen jedoch, daß diese Bedingungen für eine vollständige Monomerumsetzung unzureichend sind.

Wie in EP 0 742 239 A1 und EP 0 668 300 A1 offenbart, sind oft zusätzliche Emulgatoren (Surfactants) notwendig, um eine ausreichende Stabilität der Polyurethan-Mizellen während der Polymerisation zu gewährleisten.

Hohe Filmhärten von Polyurethan-Polymer-Hybrid-Dispersionen wie in den Druckschriften EP 0 657 483 A1 und EP 0 668 300 A1 beschrieben, werden bisher entweder durch komplizierte Syntheseverfahren oder durch chemische Nachvernetzung der Dispersionen mit entsprechenden Reagenzien erzielt oder, wie in WO 93/24551 beschrieben, durch fettsäuremodifizierte Polyesterpolyole. Aus der EP 0 745 625 A1 ist z.B. eine Polyurethan-Dispersion bekannt, bei der Bis-Aldimine, die im Gleichgewicht mit den entsprechenden Bis-Enaminen stehen, über Aminogruppen in Polyurethan-Prepolymere eingebaut werden, wodurch die Härte der resultierenden Polyurethan-Dispersionen erhöht wird. Hohe Härten werden in den genannten Patenten zudem oft nur mit Hybrid-Dispersionen erzielt, die aufgrund ihrer aufwendigen Synthese relativ große Mengen organischer Lösemittel (≥ 10 Gew.-%) enthalten und eine Mindestfilmbildetemperatur von ≥ 20°C aufweisen.

Ziel der vorliegenden Erfindung war es, eine selbstvernetzende oxidativ trocknende Polyurethan-Polymer-Hybrid-Dispersion mit hoher Filmhärte und guter Chemikalienresistenz zu entwickeln, welche die genannten Nachteile des Standes der Technik nicht aufweist und zugleich auf einem einfachen Syntheseweg kostengünstig hergestellt werden kann.

Diese Aufgabe wurde erfindungsgemäß dadurch gelöst, daß eine selbstvernetzende Polyurethan-Polymer-Hybrid-Dispersion mit hoher Filmhärte bereitgestellt wird, die erhältlich ist durch Reaktion der nachfolgend genannten Umsetzungskomponenten (A) bis (I). Die Dispersion enthält somit als Umsetzungskomponenten
(A) eine zur oxidativen Trockung befähigte ungesättigte Fettsäure-Komponente mit mindestens zwei gegenüber Polyisocyanaten reaktiven Hydroxylgruppen,
(B) eine Polyol-Komponente bestehend aus
   (i) einem hochmolekularen Polyol mit mindestens zwei gegenüber Polyisocyanaten reaktiven Hydroxylgruppen und einer Molmasse von 500 bis 4000 Dalton,
   (ii) einem niedermolekularen Polyol mit mindestens zwei gegenüber Polyisocyanaten reaktiven Hydroxylgruppen und einer Molmasse von 50 bis 500 Dalton,
   (iii) einem niedermolekularen und anionisch modifizierbaren Polyol mit mindestens zwei gegenüber Polyisocyanaten reaktiven Hydroxylgruppen sowie mindestens einer gegenüber Polyisocyanaten inerten Carboxylgruppe und einer Molmasse von 100 bis 200 Dalton,
(C) eine Polyisocyanat-Komponente,
(D) gegebenenfalls eine Siccativ-Komponente,
(E) gegebenenfalls eine Lösemittel-Komponente bestehend aus
   (i) mindestens einem gegenüber Polyisocyanaten inerten organischen Lösemittel und/oder
   (ii) einem gegenüber Polyisocyanaten inerten Reaktivverdünner bestehend aus mindestens einer gegenüber Polyisocyanaten inerten organischen Verbindung mit einer oder mehreren radikalisch polymerisierbaren Doppelbindungen,
(F) eine Neutralisations-Komponente bestehend aus mindestens einer anorganischen oder organischen Base,
(G) eine Kettenverlängerungs-Komponente bestehend aus mindestens einem Polyamin mit zwei oder mehr gegenüber Polyisocyanaten reaktiven Aminogruppen,
(H) eine Monomer-Komponente bestehend aus mindestens einem Monomer mit einer oder mehreren radikalisch polymerisierbaren Doppelbindungen,
(I) eine radikalische Initiator-Komponente sowie als Rest Wasser enthält.

Bevorzugt enthält die Dispersion die Umsetzungskomponenten
(A) 0,3 bis 12 Gew.-% einer zur oxidativen Trocknung befähigten ungesättigten Fettsäure-Komponente bestehend aus mindestens einem ungesättigten Fettsäurederivat bzw. Fettsäureepoxyester mit mindestens zwei gegenüber Polyisocyanaten reaktiven Hydroxylgruppen,
(B) 1,5 bis 18 Gew.-% einer Polyol-Komponente bestehend aus
   (i) 0,5 bis 12 Gew.-% eines hochmolekularen Polyols mit zwei oder mehr gegenüber Polyisocyanaten reaktiven Hydroxylgruppen und einer Molmasse von 500 bis 4000 Dalton,
   (ii) 0,5 bis 3,0 Gew.-% eines niedermolekularen Polyols mit zwei oder mehr gegenüber Polyisocyanaten reaktiven Hydroxylgruppen und einer Molmasse von 50 bis 500 Dalton,
   (iii) 0,5 bis 3,0 Gew.-% eines niedermolekularen und anionisch modifizierbaren Polyols mit zwei oder mehr gegenüber Polyisocyanaten reaktiven Hydroxylgruppen sowie einer oder mehreren gegenüber Polyisocyanaten inerten Carboxylgruppen und einer Molmasse von 100 bis 200 Dalton,
(C) 3,5 bis 16 Gew.-% einer Polyisocyanat-Komponente bestehend aus einem oder mehreren Polyisocyanaten, Polyisocyanat-Homologen oder Polyisocyanat-Derivaten mit zwei oder mehr aliphatischen und/oder aromatischen Isocyanatgruppen,
(D) 0 bis 2 Gew.-% einer Siccativ-Komponente bestehend aus mindestens einem wasseremulgierbaren Aktiv- oder Hilfstrockenstoff,
(E) 0 bis 8 Gew.-% einer Lösemittel-Komponente bestehend aus
   (i) mindestens einem gegenüber Polyisocyanaten inerten organischen Lösemittel, das nach der Herstellung der Polyurethan-Polymer-Hybrid-Dispersion in dieser verbleiben oder durch Destillation ganz oder teilweise entfernt werden kann, und/oder
   (ii) einem gegenüber Polyisocyanaten inerten Reaktivverdünner bestehend aus mindestens einer gegenüber Polyisocyanaten inerten organischen Verbindung mit einer oder mehreren radikalisch polymerisierbaren Doppelbindungen,
(F) 0,3 bis 2,5 Gew.-% einer Neutralisations-Komponente bestehend aus mindestens einer anorganischen oder organischen Base,
(G) 0,1 bis 1,5 Gew.-% einer Kettenverlängerungs-Komponente bestehend aus einem oder mehreren Polyaminen mit zwei oder mehr gegenüber Polyisocyanaten reaktiven Aminogruppen,
(H) 5 bis 45 Gew.-% einer Monomer-Komponente bestehend aus einem oder mehreren Monomeren mit einer oder mehreren radikalisch polymerisierbaren Doppelbindungen,
(I) 0,05 bis 2 Gew.-% einer Initiator-Komponente bestehend aus mindestens einem lipophilen Radikal-Initiator, der vorzugsweise bei einer Zerfallstemperatur innerhalb des Bereichs von 40 bis 120 °C eine Halbwertszeit von einer Stunde aufweist, sowie als Rest Wasser enthält.

Es hat sich überraschenderweise gezeigt, daß die erfindungsgemäße oxidativ trocknende Polyurethan-Polymer-Hybrid-Dispersion sehr gute anwendungstechnische Eigenschaften wie hohe Filmhärte und Chemikalienresistenz sowie eine ausgezeichnete Stabilität der Dispersion und Gefrier-/Auftaustabilität besitzt.

Die zur oxidativen Trocknung befähigte Fettsäure-Komponente (A) zum Aufbau der erfindungsgemäß vorgeschlagenen Polyurethan-Polymer-Hybrid-Dispersion mit einem Anteil von vorzugsweise 0,3 bis 12 Gew.-% bezogen auf das Gesamtgewicht der Komponenten (A) bis (I) mit Wasser besteht aus mindestens einem ungesättigten Fettsäurederivat mit zwei oder mehr, z.B. drei gegenüber Polyisocyanaten reaktiven Hydroxylgruppen, erhältlich aus ungesättigten Fettsäuren und aliphatischen und/oder aromatischen Epoxidharzen bzw. Polyepoxiden mit zwei oder mehr, z.B. drei gegenüber Fettsäuren reaktiven Epoxidgruppen. Diese Fettsäurederivate bzw. Fettsäureepoxyester werden bspw. durch stöchiometrische Umsetzung von maximal dreifach ungesättigten Fettsäuren mit einer lodzahl von 170 bis 190 g I₂·(100g)⁻¹ und aliphatischen und/oder aromatischen Epoxidharzen bzw. Polyepoxiden mit einer Epoxidzahl > 0,5 eq·(100g)⁻¹ bei Temperaturen von mindestens 140 °C unter Katalyse mit Tetraalkylammoniumhalogeniden erhalten. Bei dieser Umsetzung bzw. Additionsreaktion reagieren die Carboxylgruppen der ungesättigten Fettsäuren mit den Epoxidgruppen der Epoxidharze unter Bildung von fettsäuremodifizierten und niedermolekularen Polyolen. Die Komponente (A) besitzt vorzugsweise eine lodzahl von 100 bis 150 g I₂·(100g)⁻¹, eine Hydroxylzahl von 120 bis 150 mg KOH·g⁻¹, eine Säurezahl von 1 bis 5 mg KOH·g⁻¹ und eine Viskosität von 2 500 bis 25 000 mPa·s (20 °C).

Die Bezeichnung "ungesättigte Fettsäuren" bezieht sich vorzugsweise auf handelsübliche Gemische aus überwiegend mehrfach ungesättigten Fettsäuren, die durch Verseifung und Raffination aus trocknenden Ölen gewonnen werden können. Trocknende Öle stellen natürlich vorkommende Fette und Öle dar, die einen hohen Anteil an mehrfach ungesättigten Monocarbonsäuren im Triglyceridverbund aufweisen. Ein hohes Trocknungsvermögen gewährleisten ungesättigte Fettsäuren mit einem hohen Anteil an Monocarbonsäuren mit 18 Kohlenstoffatomen und 2 oder 3 Doppelbindungen pro Molekül, wie Linolsäure (9,12-Octadecadiensäure) und Linolensäure (9,12,15-Octadecatriensäure). Geeignete ungesättigte Fettsäuren sind beispielsweise Leinölfettsäure, Conophorölfettsäure, Lallemantiaölfettsäure, Stillingiaölfettsäure, Sojaölfettsäure, Safflorölfettsäure, Konjuenfettsäuren, Ricinenfettsäuren, bevorzugt jedoch Leinölfettsäure mit einer Säure-Zahl von 198 bis 202 mg KOH·g⁻¹ und einer lodzahl von 170 bis 190 g I₂·(100g)⁻¹. Alternativ können auch synthetische ungesättigte Fettsäuren oder Fettsäuregemische eingesetzt werden.

Epoxidharze bzw. Polyepoxide werden durch Umsetzung von Epichlorhydrin mit Polyalkoholen oder Polyaminen mit aktiven Wasserstoffatomen oder durch Epoxidierung von ungesättigten Verbindungen erhalten. Geeignete Polyepoxide sind beispielsweise die durch Umsetzung mit Epichlorhydrin erhaltenen polyfunktionellen Glycidylderivate von 2,2'-Bis-(4-hydroxyphenyl)-propan (Bisphenol A), 2,2'-Bis-(4-hydroxyphenyl)-methan (Bisphenol F), 1,1,2,2-Tetrakis- (4-hydroxyphenyl)-ethan, Phenol-Formaldehyd-Kondensate vom Novolak-Typ, 1,4-Butandiol, 1,4-Bis-(hydroxymethyl)-cyclohexan (Cyclohexandimethanol), 1,2,3-Propantriol (Glycerol), 2-Ethyl-2-hydroxymethyl-1,3-propandiol (Trimethylolpropan), Aminobenzol, 4-Amino-phenol, 2,4,6-Trihydroxy-1,3,5-triazin (Isocyanursäure). Unter Glycidylderivaten werden dabei Epoxidharze bzw. Polyepoxide verstanden. Bevorzugt werden Polyepoxide mit einer Epoxidzahl größer als 0,5 eq·(100g)⁻¹ eingesetzt.

Besonders geeignet sind Polyepoxide auf Basis von Bisphenol A und Bisphenol F wie Bisphenol-A-diglycidylether und Bisphenol-F-diglycidylether für oxidativ trocknende Diole sowie Polyepoxide auf Basis von 2,4,6-Trihydroxy-1,3,5-triazin wie lsocyanursäure-tris-(2,3-epoxypropyl)-ester bzw. 1,3,5-Tris-(2,3-epoxypropyl)-1,3,5-trihydrotriazin-2,4,6-trion für oxidativ trocknende Triole. Die Chemie der Epoxidharze wird in dem Handbuch "Chemistry And Technology Of Epoxy Resins" von B. Ellis (Editor), Blackie Academic & Professional, Glasgow 1993 im Detail beschrieben. Gemäß einer bevorzugten Ausführungsform wird als Komponente (A) ein Addukt aus Leinölfettsäure und Bisphenol-A-diglycidylether verwendet.

Die Polykomponente (B) zum Aufbau der erfindungsgemäß vorgeschlagenen Polyurethan-Polymer-Hybrid-Dispersion mit einem Anteil von vorzugsweise 1,5 bis 18 Gew.-% bezogen auf das Gesamtgewicht der Komponenten (A) bis (I) mit Wasser besteht aus den drei Einzelkomponenten (B) (i), (B) (ii) und (B) (iii).

Die Komponente (B) (i) mit einem Anteil von vorzugsweise 0,5 bis 12 Gew.-% bezogen auf das Gesamtgewicht der Komponenten (A) bis (I) mit Wasser besteht aus mindestens einem höhermolekularen Polyol mit zwei oder mehr gegenüber Polyisocyanaten reaktiven Hydroxylgruppen und einer mittleren Molmasse (Zahlenmittel Mₙ) von 500 bis 4 000 Dalton. Dabei kann es sich um polymere Polyole wie Polyalkylenglykole, aliphatische und/oder aromatische Polyester, Polycaprolactone, Polycarbonate, Makromonomere, Telechele oder Epoxidharze oder Gemische daraus handeln. Polyalkylenglykole werden aus Monomeren wie Ethylenoxid, Propylenoxid, Butylenoxid, Tetrahydrofuran durch Polymerisation in Gegenwart von Bortrifluorid oder durch Polyaddition an Starterverbindungen mit reaktiven Wasserstoffatomen wie Wasser, Alkohole, Amine oder Bisphenol A erhalten. Dabei können auch Gemische der Monomeren gleichzeitig oder nacheinander eingesetzt werden. Als geeignete Polyalkylenglykole können bspw. Polyethylenglykole, Polypropylenglykole (z.B. Voranol-Typen der Fa. Dow), gemischte Polyglykole auf Basis Ethylenoxid und Propylenoxid sowie Polytetramethylenglykole bzw. Polytetrahydrofurane (z.B. PolyTHF 2000 der Fa. BASF) verwendet werden. Aliphatische und/oder aromatische Polyester-Polyole werden durch Polykondensationsreaktion und/oder Polyadditionsreaktion aus zwei- oder mehrwertigen Alkoholen und zwei- oder mehrwertigen Carbonsäuren, Carbonsäureanhydriden oder Carbonsäureestern erhalten. Als geeignete aliphatische oder aromatische Polyester können bspw. Kondensate auf Basis von 1,2-Ethandiol (Ethylenglykol), 1,4-Butandiol (1,4-Butylenglykol), 1,6-Hexandiol (1,6-Hexamethylenglykol)und 2,2-Dimethyl-1,3-propandiol (Neopentylglykol) sowie 1,6-Hexandisäure (Adipinsäure) und 1,3-Benzoldicarbonsäure (Isophthalsäure) (z.B. Bester-Typen der Fa. Poliolchimica) eingesetzt werden. Polycaprolactone (z.B. Capa-Typen der Fa. Solvay Interox) und Polycarbonate (z.B. Desmophen C 200 der Fa. Bayer) sind ebenfalls zur Gruppe der Polyester zugehörig. Erstere werden durch Umsetzung von Phosgen bzw. aliphatischen oder aromatischen Carbonaten, wie bspw. Diphenylcarbonat oder Diethylcarbonat, mit zwei-oder mehrwertigen Alkoholen erhalten. Letztere werden durch Polyaddition von Lactonen, wie bspw. ε-Caprolacton, an Starterverbindungen mit reaktiven Wasserstoffatomen wie Wasser, Alkohole, Amine oder Bisphenol A hergestellt. Denkbar sind auch synthetische Kombinationen von Polyestern, Polycaprolactonen und Polycarbonaten. Ebenfalls geeignet sind Makromonomere, Telechele oder Epoxidharze. Bei den Makromonomeren und Telechelen handelt es sich um Polyhydroxyolefine, wie bspw., α-ω-Dihydroxypolybutadiene, α-β-Dihydroxy(meth)acrylsäureester, α-ω-Dihydroxy(meth)acrylsäureester oder α-ω- Dihydroxypolysiloxane. Bei den Epoxidharzen handelt es sich vorzugsweise um Derivate des Bisphenol-Adiglycidethers (BADGE). Bevorzugt werden lineare difunktionelle aliphatische oder aromatische Polyester-Polyole mit einer mittleren Molekularmasse (Zahlenmittel Mₙ) von 1 000 bis 4 000 Dalton und insbesondere 1000 bis 3000 Dalton. Besonders bevorzugt werden difunktionelle lineare Polyesterpolyole auf Basis von Adipinsäure, 1,4-Butylenglykol und Ethylenglykol eingesetzt.

Die Komponente (B) (ii) mit einem Anteil von vorzugsweise 0,5 bis 3,0 Gew.-% bezogen auf das Gesamtgewicht der Komponenten (A) bis (I) mit Wasser besteht aus mindestens einem niedermolekularen Polyol mit zwei oder mehreren gegenüber Polyisocyanaten reaktiven Hydroxylgruppen und einer Molmasse von 50 bis 500 Dalton. Als geeignete niedermolekulare Polyole können bspw. 1,2-Ethandiol (Ethylenglykol), 1,2-Propandiol (1,2-Propylenglykol), 1,3-Propandiol (1,3-Propylenglykol), 1,4-Butandiol (1,4-Butylenglykol), 1,6-Hexandiol (1,6-Hexamethylenglykol), 2-Methyl-1,3-propandiol (Handelsname MPDiol Glycol® der Fa. Arco Chemical), 2,2-Dimethyl-1,3-propandiol (Neopentylglykol), 1,4-Bis-(hydroxymethyl)-cyclohexan (Cyclohexandimethanol), 1,2,3-Propantriol (Glycerol), 2-Hydroxymethyl-2-methyl-1,3-propanol (Trimethylolethan), 2-Ethyl-2-hydroxymethyl-1,3-propandiol (Trimethylolpropan), 2,2-Bis-(hydroxymethyl)-1,3-propandiol (Pentaerythrit) eingesetzt werden. Bevorzugt werden 1,4-Butylenglykol oder 1,4-Butylenglykol in Kombination mit Trimethylolpropan eingesetzt.

Die Komponente (B) (iii) mit einem Anteil von vorzugsweise 0,5 bis 3,0 Gew.-% bezogen auf das Gesamtgewicht der Komponenten (A) bis (I) mit Wasser besteht aus mindestens einem niedermolekularen und anionisch modifizierbaren Polyol mit zwei oder mehreren gegenüber Polyisocyanaten reaktiven Hydroxylgruppen und einer oder mehreren gegenüber Polyisocyanaten inerten Carboxylgruppen, die in Gegenwart von Basen ganz oder teilweise in Carboxylatgruppen überführt werden können. Als niedermolekulare und anionisch modifizierbare Polyole mit einer Molekularmasse von 100 bis 200 Dalton können bspw. 2-Hydroxymethyl-3-hydroxypropansäure (Dimethylolessigsäure), 2-Hydroxymethyl-2-methyl-3-hydroxypropansäure(Dimethylolpropionsäure),2-Hydroxymethyl-2-ethyl-3-hydroxypropansäure(Dimethylolbuttersäure),2-Hydroxymethyl-2-propyl-3-hydroxypropansäure (Dimethylolvaleriansäure), Citronensäure, Weinsäure eingesetzt werden. Bevorzugt werden Bishydroxyalkancarbonsäuren eingesetzt und besonders bevorzugt 2-Hydroxymethyl-2-methyl-3-hydroxypropansäure (Dimethylolpropionsäure) (Handelsname DMPA® der Fa. Mallinckrodt).

Die Polyisocyanat-Komponente (C) mit einem Anteil von vorzugsweise 3,5 bis 16 Gew.-% bezogen auf das Gesamtgewicht der Komponenten (A) bis (I) mit Wasser besteht aus mindestens einem Polyisocyanat, Polyisocyanatderivat oder Polyisocyanathomologen mit zwei oder mehre aliphatischen und/oder aromatischen lsocyanatgruppen. Geeignet sind insbesondere die in der Polyurethanchemie hinreichend bekannten Polyisocyanate oder Kombinationen daraus. Als geeignete aliphatische Polyisocyanate können bspw. 1,6-Diisocyanatohexan (HDI), 1-Isocyanato-5-isocyanatomethyl-3,3,5-trimethyl-cyclohexan (IPDI), Bis-(4-isocyanatocyclohexyl)-methan (H₁₂MDI), 1,3-Bis-(1-isocyanato-1-methyl-ethyl)-benzol (m-TMXDI) bzw. technische Isomerengemische der einzelnen aromatischen Polyisocyanate eingesetzt werden. Als geeignete aromatische Polyisocyanate können beispielsweise 2,4-Diisocyanatotoluol (TDI), Bis-(4-isocyanatophenyl)-methan (MDI) und ggf. dessen höhere Homologe (Polymeric MDI) bzw. technische Isomerengemische der einzelnen aromatischen Polyisocyanate eingesetzt werden. Weiterhin sind auch die sogenannten "Lackpolyisocyanate" auf Basis von Bis-(4-isocyanatocyclohexyl)-methan (H₁₂MDI), 1,6-Diisocyanatohexan (HDI), 1-Isocyanato-5-isocyanatomethyl-3,3,5-trimethyl-cyclohexan(IPDI)grundsätzlichgeeignet. Der Begriff "Lackpolyisocyanate" kennzeichnet Allophanat-, Biuret-, Carbodiimid-, Isocyanurat-, Uretdion- oder Urethangruppen aufweisende Derivate dieser Diisocyanate, bei denen der Restgehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Weiterhin werden Polyisocyanate mit Isocyanatgruppen unterschiedlicher Reaktivität bevorzugt. Insbesondere wird Isophorondiisocyanat bzw. 1-Isocyanato-5-isocyanatomethyl-3,3,5-trimethyl-cyclohexan bzw. dessen technische Isomerengemische eingesetzt.

Die fakultativ vorhandene Siccativ-Komponente (D) mit einem Anteil von vorzugsweise bis 2 Gew.-% bezogen auf das Gesamtgewicht der Komponenten (A) bis (I) mit Wasser besteht aus wasseremulgierbaren Aktivund Hilfstrockenstoffen oder Gemischen davon. Bei diesen Siccativen bzw. Trockenstoffen handelt es sich in der Regel um organometallische und in aliphatischen oder aromatischen Solventien lösliche Metallseifen oder um konventionelle Metallsalze mit Metallen der Elemente aus der II. bis IV. Hauptgruppe bzw. II., IV., VII und VIII. Nebengruppe bzw. der Seltenen Erden des Periodensystems. Die Metallsalze bestehen bevorzugt aus anorganischen Metall-halogeniden (F, Cl, Br, I), -nitraten, -sulfonaten,-formiaten, -acetaten, -oxosalzen. Geeignete, katalytisch wirksame Metalle sind: Aluminium, Barium, Blei, Calcium, Cer und Seltene Erden allgemein, Eisen, Kobalt, Mangan, Quecksilber, Zink, Zirkon, Kupfer, Magnesium und Nickel. Bei den Metallseifen bestehen die "Metallträger" (= Carboxylat-Anionen) vorwiegend aus Monocarbonsäuren. Die Metaliseifen können hierbei "Neutrale Seifen", "Saure Seifen", "Basische Seifen" oder "Organische Komplex- bzw. Mischseifen" sein. Trockenstoffe als Katalysatoren beschleunigen den Zerfall der in Anwesenheit von Sauerstoff intermediär gebildeten Peroxide und damit die oxidative Trocknung bzw.

Vernetzung. Aktivtrockenstoffe basieren auf Metallen mit mehreren Oxidationsstufen, die Redoxreaktionen zugänglich sind, wie z.B. Kobalt, Mangan. Hilfstrockenstoffe haben nur in Kombination mit Aktivtrockenstoffen eine trocknungsfördernde Wirkung und basieren auf Metallen mit nur einer Oxidationsstufe, wie z.B. Barium, Calcium, Zink. Bevorzugt werden wasseremulgierbare Aktiv- und Hilfstrockenstoffe oder wasseremulgierbare Kombinationstrockner eingesetzt, wie z. B. Trockner auf Basis von Kobalt, Mangan, Barium, Zink, Calcium.

Die fakultativ vorhandene Lösemittel-Komponente (E) (i) mit einem Anteil von vorzugsweise bis 8 Gew.-% bezogen auf das Gesamtgewicht der Komponenten (A) bis (I) mit Wasser besteht aus mindestens einem gegenüber Polyisocyanaten inerten und vorzugsweise mit Wasser ganz oder teilweise mischbaren Solvens, das nach der Herstellung in der Polyurethan-Dispersion verbleiben oder durch Destillation ganz oder teilweise entfernt werden kann. Geeignete Solventien sind beispielsweise hochsiedende und hydrophile organische Lösemittel wie N-Methylpyrrolidon, Diethylenglykoldimethylether, Dipropylenglykoldimethylether (Proglyde DMM® der Fa. Dow), niedrigsiedende Lösemittel wie Aceton, Butanon oder beliebige Gemische daraus. Bevorzugt wird ein hochsiedendes und hydrophiles Lösemittel wie N-Methylpyrrolidon eingesetzt, das nach der Herstellung in der Dispersion verbleibt und als Koaleszenzhilfsmittel fungieren kann.

Die fakultativ vorhandene Lösemittel-Komponente (E) (ii) mit einem Anteil von vorzugsweise bis 8 Gew.-% bezogen auf das Gesamtgewicht der Komponenten (A) bis (I) mit Wasser ist aus mindestens einem, gegenüber Polyisocyanaten inerten Reaktivverdünnner, zusammengesetzt, bestehend aus mindestens einer gegenüber Polyisocyanaten inerten organischen Verbindung (wie z. B. Polyethylenglykol), die eine oder mehrere radikalisch polymerisierbare Doppelbindungen enthält. Geeignete Solventien sind beispielsweise Derivate der Acrylsäure wie Methoxypolyethylen-glykolmethacrylate, Polyethylenglykoldimethacrylate, Methylmethacrylat, n-Butylacrylat, Methylacrylat, Acetoacetoxyethylmethacrylat, oder Polyethylenglykolmethylvinylether, N-Vinylimidazol und N-Vinylpyrrolidon.
Bevorzugt werden Methoxypolyethylenglykolmethacrylate mit 2 bis 20 Ethylenglykoleinheiten und Methacrylate eingesetzt.

Die Neutralisations-Komponente (F) mit einem Anteil von vorzugsweise 0,3 bis 2,5 Gew.-% bezogen auf das Gesamtgewicht der Komponenten (A) bis (I) mit Wasser besteht aus einer oder mehreren anorganischen und/oder organischen Base(n), die zur vollständigen oder teilweisen Neutralisation der Carboxylgruppen, insbesondere von Komponente (B)(iii) dienen. Als geeignete Basen können tertiäre Amine wie N,N-Dimethylethanolamin, N-Methyldiethanolamin, N-Methyldiisopropanolamin, Dimethylisopropanolamin, N-Methylmorpholin, N-Ethylmorpholin, Triethanolamin, Triethylamin, Triisopropylamin, Ammoniak oder Alkalihydroxide wie Lithiumhydroxid, Natriumhydroxid, Kaliumhydroxid verwendet werden. Bevorzugt werden tertiäre Amine und insbesondere Triethylamin eingesetzt.

Mit der Neutralisations-Komponente (F) mit einem Anteil von 0,3 bis 2,5 Gew.-% wird vor und/oder während der Dispergierung eine direkte und/oder indirekte Neutralisation, d.h. eine anionische Modifizierung der Polyurethan-Prepolymere vorgenommen. Bei der Neutralisation werden aus den Carboxylgruppen Carboxylatgruppen gebildet, die zur anionischen Modifizierung der Polyurethan-Dispersion und Polyurethan-Basis-Dispersion und der daraushergestellten Polyurethan-Polymer-Hybrid-Dispersion dienen.

Die Kettenverlängerungs-Komponente (G) mit einem Anteil von vorzugsweise 0,1 bis 1,5 Gew.-% bezogen auf das Gesamtgewicht der Komponenten (A) bis (I) mit Wasser besteht aus mindestens einem Polyamin mit zwei oder mehreren gegenüber Polyisocyanaten reaktiven Aminogruppen. Geeignete Polyamine sind beispielsweise Adipinsäuredihydrazid, Ethylendiamin, Diethylentriamin, Triethylentetramin, Tetraetylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS) und Ethylendiamin oder beliebige Kombinationen dieser Polyamine. Bevorzugt werden difunktionelle primäre Amine und insbesondere 1,2-Diaminoethan (Ethylendiamin) eingesetzt. Die Kettenverlängerung der Polyurethan-Prepolymer-Dispersion führt zum Aufbau der Molekularmasse innerhalb der Mizellen und zur Bildung einer Polyurethan-Polyharnstoff-Dispersion hoher Molekularmasse. Die reaktiven Isocyanatgruppen reagieren dabei mit der Kettenverlängerungs-Komponente wesentlich rascher als mit Wasser. Die Isocyanatgruppen der Polyurethan-Prepolymere werden dabei in Harnstoffgruppen überführt. Im Anschluß werden eventuell noch vorhandene freie Isocyanatgruppen mit Wasser vollständig kettenverlängert. Gemäß einer bevorzugten Ausführungsform enthält die Komponente (G) 20 bis 80 Gew.-%, insbesondere ca. 50 Gew.-%, an Dispergiermedium (Wasser).

Der Feststoffgehalt des Polyurethan-Polymers bestehend aus den Komponenten (A) bis (G) beträgt vorzugsweise 20 bis 60 Gew.-%, insbesondere 30 bis 50 Gew.-%, bezogen auf das Gesamtgewicht der zunächst hergestellten Polyurethan-Basis-Dispersion. Die Mizellen des Polyurethan-Polymers besitzen eine bevorzugte mittlere Teilchengröße von 50 bis 500 nm, insbesondere 100 bis 200 nm. Außerdem weist das Polyurethan-Polymer eine mittlere Molmasse von vorzugsweise 25 000 bis 100 000 Dalton auf.

Die Monomerkomponente (H) mit einem Anteil von vorzugsweise 5 bis 45 Gew.-% bezogen auf das Gesamtgewicht der Komponenten (A) bis (I) mit Wasser besteht aus einem oder mehreren Monomeren mit einer oder mehreren radikalisch polymerisierbaren Doppelbindungen. Geeignete Monomere sind beispielsweise Derivate der Acrylsäure wie Methacrylsäure, Methacrylsäureanhydrid, Methacrylnitril, Methacrylamid, Methylmethacrylat, Ethylmethacrylat, n-Butylmethacrylat, i-Butylmethacrylat, n-Hexylmethacrylat, Cyclohexylmethacrylat, 2-Ethylhexylmethacrylat, Isobornylmethacrylat, Benzylmethacrylat, 2-Hydroxyethylmethacrylat, Hydroxypropylmethacrylat, 2-Hydroxyethylacrylat, Hydroxypropylacrylat, 2-Dimethylaminoethylmethacrylat, Ethyltriglykolmethacrylat, Tetrahydrofurfurylmethacrylat, Methacrylsäureanhydrid, Allylmethacrylat, Ethylenglykoldimethacrylat, Diethylenglykoldimethacrylat, Triethylenglykoldimethacrylat, Tetraethylenglykoldimethacrylat, Polyethylenglykol-400-dimethacrylat, 1,3-Butandioldimethacrylat, 1,4-Butandioldimethacrylat, 1,6-Hexandioldimethacrylat, Methylacrylat, n-Butylacrylat, n-Hexylacrylat, n-Octylacrylat, n-Octylmethacrylat, Acrylsäure, Acetoacetoxyethylmethacrylat, Acrylamid, N-Butoxymethylmethacrylamid, N-lsobutoxymethylmethacrylamid, 2-Acrylamido-2-methylpropan-1-sulfonsäure (AMPS), Methoxypolyethylenglykolmethacrylate, Methoxypolyethylenglykolacrylate, Polyethylenglykoldimethacrylate oder Styrol-Derivate wie Styrol, Methylstyrol, Ethylstyrol. Bevorzugt werden Acrylsäure (Propensäure) und deren Derivate und/oder Methacrylsäure (2-Methylpropensäure) und deren Derivate und/oder Styrol und dessen Derivate verwendet. Vorzugsweise werden Kombinationen von 75 bis 85 Gew.-% Methylmethacrylat, 5 bis 15 Gew.-% n-Butylacrylat und 10 bis 20 Gew.-% an weiteren Monomeren, besonders bevorzugt Kombinationen aus 85 Gew.-% Methylmethacrylat und 15 Gew.-% n-Butylacrylat oder aus 75 Gew.-% Methylmethacrylat, 15 Gew.-% n-Butylacrylat und 10 Gew.-% Styrol, eingesetzt.

Die Initiatorkomponente (I) mit einem Anteil von vorzugsweise 0,05 bis 2 Gew.-% bezogen auf das Gesamtgewicht der Komponenten (A) bis (I) mit Wasser besteht aus mindestens einem lipophilen Radikal-Initiator, der vorzugsweise bei einer Zerfallstemperatur innerhalb des Bereichs von 40 bis 120°C eine Halbwertszeit von einer Stunde aufweist, d.h. innerhalb des Bereichs von 40 bis 120°C existiert eine Temperatur, bei der der verwendete Initiator zu 50% zerfällt. Geeignete Initiatoren sind beispielsweise Peroxidinitiatoren wie Dilauroylperoxid, Dibenzoylperoxid, tert. Amylperoxyneodecanoat, tert. Butylperoxyneodecanoat, tert. Butylperoxypivalat,2,5-Dimethyl-2,5-di(2-ethylhexanoylperoxy)hexan,tert. Amylperoxy-2-ethylhexanoat, tert. Butylperoxy-2-ethylhexanoat, tert. Amylperoxybenzoat, tert. Butylperoxybenzoat, Persulfat-Initiatoren wie Ammoniumperoxodisulfat, Natriumperoxodisulfat, Kaliumperoxodisulfat, Azo-lnitiatorenwie2,2'-Azobis(2-cyclopropylpropionitril),2,2'-Azobis(2,4-dimethylvaleronitril), 2,2'-Azobis(2-methylbutyronitril), 2,2'-Azobis(2-methylpropionitril), 1,1 '-Azobis(cyclohexan-1-carbonitril). Bevorzugt werden Radikal-Initiatoren mit einer oder mehreren Azo- oder Peroxogruppen, die bei einer Zerfallstemperatur von 70 bis 90°C eine Halbwertszeit von einer Stunde aufweisen, eingesetzt. Besonders bevorzugt wird 2,2'-Azobis(2-methylpropionitril) bzw. 2,2'-Azoisobutyronitril eingesetzt.

Der Feststoffgehalt in der Polyurethan-Polymer-Hybrid-Dispersion beträgt 20 bis 60 Gew.-%, vorzugsweise 30 bis 50 Gew.-%, bezogen auf die Gesamtmenge der reinen Polyurethan-Polymer-Hybrid-Dispersion. Hierbei liegt das Verhältnis der anteiligen Festkörpergehalte aus Polyurethan-Harz und Polymer-Harz insbesondere bei 20 bis 80 zu 80 bis 20 Gew.-%, vorzugsweise bei 40 bis 60 zu 60 bis 40 Gew.-%, und besonders bevorzugt bei ca. 50 zu 50 Gew.-%.

Die mittleren Partikelgrößen der Mizellen des Polyurethan-Hybrid-Polymers betragen vorzugsweise 50 bis 500 nm, insbesondere 50 bis 250 nm. Das Polyurethan-Hybrid-Polymer besitzt eine bevorzugte mittlere Molmasse von 25 000 bis 250 000 Dalton.

Ein weiterer Gegenstand der Erfindung ist ein Verfahren zur Herstellung einer Polyurethan-Polymer-Hybrid-Dispersion, dadurch gekennzeichnet, daß in der Reaktionsstufe (a) zunächst eine Polyurethan-Basis-Dispersion hergestellt wird, wobei
(a1) die Fettsäurekomponente (A), die Polyol-Komponenten (B)(i), (B)(ii) und (B)(iii) mit der Polyisocyanat-Komponente (C) gegebenenfalls in Gegenwart einer Siccativ-Komponente (D) sowie einer Lösemittel-Komponente (E) und gegebenenfalls in Gegenwart eines Katalysators zu einem Polyurethan-Prepolymer umgesetzt werden,
(a2) das Polyurethan-Prepolymer aus Stufe (a1) mit dem Dispergiermedium und der Neutralisations-Komponente (F) vermischt wird und anschließend
(a3) die Polyurethan-Prepolymer-Dispersion aus Stufe (a2) mit der Kettenverlängerungs-Komponente (G) umgesetzt wird, und dann in der Reaktionsstufe (b) eine Polyurethan-Polymer-Hybrid-Dispersion hergestellt wird, indem
(b1) die Polyurethan-Basis-Dispersion aus Stufe (a3) mit einem vorgefertigen Gemisch aus der Monomer-Komponente (H) und der Initiator-Komponente (I) versetzt wird und anschließend
(b2) durch den thermischen Zerfall der Komponente (I) eine radikalische Polymerisaton der Komponente (H) innerhalb der Mizellen der Polyurethan-Basis-Dispersion durchgeführt wird.

Zur Herstellung der erfindungsgemäßen Polyurethan-Polymer-Hybrid-Dispersion wird unter Anwendung der in der Polyurethanchemie üblichen Techniken in der Reaktionsstufe (a) eine Polyurethan-Basis-Dispersion mit Hilfe eines Prepolymer-Mixing-Prozess hergestellt. Dazu werden im Verfahrensschritt (a1) vorzugsweise 0,3 bis 12 Gew.-% der zur oxidativen Trocknung befähigten Fettsäure-Komponente (A), vorzugsweise 0,5 bis 12 Gew.-% der höhermolekularen Polyol-Komponente (B) (i), vorzugsweise 0,5 bis 3,0 Gew.-% der niedermolekularen Polyol-Komponente (B) (ii) sowie vorzugsweise 0,5 bis 3,0 Gew.-% des niedermolekularen und anionisch modifizierbaren Polyols (B) (iii) mit vorzugsweise 3,5 bis 16 Gew.-% der Polyisocyanat-Komponente (C) gegebenenfalls in Gegenwart von 0 bis 2 Gew.-% der Siccativ-Komponente (D) und gegebenenfalls in Gegenwart von 0 bis 8 Gew.-% der Lösemittel-Komponente (E) bei einer Temperatur von vorzugsweise 60 bis 120 °C, besonders bevorzugt 80 bis 100 °C, zu einem Polyurethan-Prepolymer umgesetzt. Hierbei beträgt das NCO/OH-Equivalent-Verhältnis der Komponenten (A), (B) und (C) vorzugsweise 1,2 bis 2,0, besonders bevorzugt 1,4 bis 1,8. Das Polyurethan-Prepolymer kann gegebenenfalls in Gegenwart von 0,01 bis 1 Gew.-% bezogen auf die Komponenten (A), (B), (C), (D) und (E) eines für Polyadditionsreaktionen an Polyisocyanaten üblichen Katalysators hergestellt werden.

Das erhaltene Polyurethan-Prepolymer aus Stufe (a1) wird im Verfahrensschritt (a2) mit dem Dispergiermedium und der Neutralisations-Komponente (F) vermischt. Für eine indirekte Neutralisation wird das Prepolymer vorzugsweise bei einer Temperatur von 30 bis 60 °C, insbesondere 40 bis 50 °C, in das Dispergiermedium Wasser überführt, das vorzugsweise 0,3 bis 2,5 Gew.-% der zur Neutralisation erforderlichen Komponente (F) enthält. Im Falle einer direkten Neutralisation kann die Neutralisations-Komponente (F) bereits nach Reaktionsstufe (a1) in das Polyurethan-Prepolymer eingerührt werden. Die Neutralisations-Komponente wird vorzugsweise in einer solchen Menge zugegeben, daß der Neutralisationsgrad bezogen auf die freien Carboxylgruppen des Polyurethan-Prepolymers bei 70 bis 100 Equivalent-%, insbesondere bei 90 und 100 Equivalent-%, liegt. Es ist im Rahmen der vorliegenden Erfindung auch möglich, die Siccativ-Komponente (D) erst in Reaktionsstufe (a2) im Dispergiermedium vorzulegen.

Anschließend wird in der Verfahrensstufe (a3) die Polyurethan-Prepolymer-Dispersion aus Stufe (a2) mit vorzugsweise 0,1 bis 1,5 Gew.-% der zur Kettenverlängerung erforderlichen Kettenverlängerungs-Komponente (G), die vorzugsweise in gelöster Form vorliegt, z.B. gelöst in vor der Zugabe entnommenen Anteilen des Dispergiermediums, bei Temperaturen von vorzugsweise 20 bis 60 °C, insbesondere 30 bis 50 °C, umgesetzt, wobei die Komponente (G) vorzugsweise 20 bis 80 Gew.-%, insbesondere 50 Gew.-% an Dispergiermedium enthält. Die Kettenverlängerungs-Komponente (G) wird vorzugsweise in einer solchen Menge eingesetzt, daß der Kettenverlängerungsgrad bezogen auf die freien Isocyanatgruppen des Polyurethan-Prepolymers bei 50 bis 100 Equivalent-%, insbesondere bei 60 bis 90 Equivalent-%, liegt.

Die im Verfahrensschritt (a3) erhaltene Polyurethan-Basis-Dispersion dient sodann zur Herstellung der Polyurethan-Polymer-Hybrid-Dispersion in Stufe (b). Dabei wird im Verfahrensschritt (b1) die Polyurethan-Basis-Dispersion aus Stufe (a3) mit einem vorgefertigten Gemisch aus vorzugsweise 5 bis 45 Gew.-% der Monomer-Komponente (H) und vorzugsweise 0,05 bis 2 Gew.-% der Initiator-Komponente (I) bei einer Temperatur von vorzugsweise 15 bis 35 °C, insbesondere 20 bis 30 °C, versetzt. Anschließend wird im Verfahrensschritt (b2) die Dispersion erwärmt und durch den thermischen Zerfall der Komponente (I) eine radikalische Polymerisation der Komponente (H) innerhalb der Mizellen der Polyurethan-Basis-Dispersion durchgeführt. Die Durchführung der Reaktionsstufe (b2) erfolgt vorzugsweise bei einer Temperatur, die innerhalb eines Bereichs von ± 10°C bezogen auf die Temperatur liegt, bei der die Komponente (I) eine Halbwertszeit von 1 Stunde aufweist. Bei Verwendung von 2,2'-Azobisisobutyronitril bzw. 2,2'-Azobis(2-methyl-propionitril) als Komponente (I) wird die Reaktionsstufe (b2) vorzugsweise bei einer Temperatur von 80 ± 10°C durchgeführt. Gemäß einer bevorzugten Ausführungsform wird das Initiator/Monomer-Molverhältnis der Komponenten (H) und (I) im Bereich von 0,001 bis 0,05 mol-%, vorzugsweise auf 0,008 mol-%, eingestellt. Nach beendeter Polymerisation wird die fertige Polyurethan-Polymer-Hybrid-Dispersion abgekühlt und filtriert.

Der Vorteil dieser Herstellungsmethode liegt darin, daß Monomere und Initiator zusammen bei Raumtemperatur zugegeben werden können und daß für deren Stabilisierung in der Polyurethan-Dispersion keinerlei zusätzliche Emulgatoren (Surfactants) notwendig sind. Die Ladungsdichte der Polyurethan-Mizellen ist ausreichend groß, um die Polymerisation der Monomere innerhalb der Mizellen ohne Emulgatoren - allein durch deren Stabilität - zu gewährleisten. Die Stabilität der Polyurethan-Polymer-Hybrid-Mizellen bleibt auch nach vollendeter Polymerisation über einen langen Zeitraum ohne weitere stabilisierende Zusätze erhalten. Erfahrungsgemäß werden bei Verwendung des Prepolymer-Mixing-Prozess geringe Mengen an Nebenprodukten gebildet, die in der Polyurethan-Dispersion nicht ausreichend stabilisiert werden und somit in Form von feinen Nadeln sedimentieren. Diese Nebenprodukte müssen über feine Filter aufwendig von der Dispersion abgetrennt werden. Eine Verdünnung des Kettenverlängerungsmittels mit Teilen des Dispergiermediums konnte diesen Effekt überraschenderweise vollständig zurückdrängen.

Die erfindungsgemäße Polyurethan-Polymer-Hybrid-Dispersion ist im Vergleich zu den aus dem Stand der Technik bekannten Produkten verfahrenstechnisch weniger aufwendig, von der Stoffzusammensetzung viel unkomplizierter aufgebaut und stellt somit ein kostengünstiges Bindemittel für bauchemische Anwendungen dar, das in seiner Performance und seinen Materialeigenschaften kommerziell verfügbare Produkte erreicht oder übertrifft.

Die Filmhärte der erfindungsgemäßen Polyurethan-Polymer-Hybrid-Dispersionen ist wesentlich größer, als die der entsprechenden nicht fettsäuremodifizierten Hybrid-Dispersionen. Auch die Vergilbungsbeständigkeit der erfindungsgemäßen Polyurethan-Polymer-Hybrid-Dispersionen ist gegenüber kommerziellen fettsäuremodifizierten Polyurethan-Dispersionen deutlich besser, da bereits geringe Mengen der Fettsäurekomponente das verbesserte Eigenschaftsprofil bewirken.

Die erfindungsgemäße Polyurethan-Dispersion eignet sich hervorragend als Bindemittel für ein- oder zweikomponentige Lacke, Versiegelungen, Verklebungen und Beschichtungen der Oberflächen von mineralischen Baustoffen, wie z. B. Beton, Holz und Holzwerkstoffen, Metall und Kunststoffen.

Die Vorteile der erfindungsgemäßen Polyurethan-Polymer-Hybrid-Dispersion, wie hohe Härte bei gleichzeitig hoher Flexibilität der rißfreien Filme, gute Chemikalienresistenz, große Stabilität der Dispersion in einem weiten pH-Bereich, gute Gefrier-/Auftaustabilität und der Einsatz kostengünstiger Rohstoffe, werden in einem vereinfachten Syntheseweg, ohne nachträgliche chemische Vernetzung, bei zugleich niedrigem Gehalt an organischem Lösemittel (≤ 4 Gew.-%) und guter Verfilmung bei Temperaturen ≥ +10°C erzielt.

Die nachfolgenden Beispiele sollen die Erfindung näher veranschaulichen.

### Beispiel 1

### Herstellung der Polyurethan-Basis-Dispersionen

### Standardbeschreibung für alle Polyurethan-Basis-Dispersionen (Varianten A bis F):

In einem Vierhalskolben ausgerüstet mit KPG-Rührer, Rückflußkühler, Thermometer und Stickstoffdeckung wurde Isophorondiisocyanatvorgelegt und mit der halben Menge eines vorgefertigten Polyol-Gemisches, bestehend aus einem Polyester-Polyol (Handelsname: B 42H der Fa. Poliolchimica), einem fettsäuremodifizierten Diol (Kondensat aus Bisphenol-A-diglycidylether und Leinölfettsäure), 1,4-Butandiol (Fa. Aldrich), Dimethylolpropionsäure (Handelsname: DMPA® der Fa. Mallinckrodt) und N-Methylpyrrolidon (Fa. Aldrich), versetzt. Die Mischung wurde unter Stickstoffdeckung bei 80 - 90°C bis zum Abklingen der Exothermie gerührt. Nach der Zugabe der zweiten Hälfte des Polyol-Gemisches wurde unter Stickstoffdeckung bei 80 - 90°C gerührt, bis der berechnete NCO-Gehalt erreicht wurde (NCO/OH = 1,40). Der Verlauf der Reaktion wurde acidimetrisch verfolgt. Gegebenenfalls wurde nun ein Gemisch aus Trocknungshilfsstoffen (Siccative) bei 60°C in das Prepolymer eingerührt. Das Prepolymer wurde dann unter intensivem Rühren in ein Gemisch aus demineralisiertem Wasser und Triethylamin (100 mol %) (indirekte Neutralisation) dispergiert. Zum Aufbau der Polyurethan-Dispersion wurde mit einem Gemisch (1:1 Gew.-%) aus Ethylendiamin (70 Equivalent-%) und demineralisiertem Wasser kettenverlängert.

Es wurden stabile Polyurethan-Basis-Dispersionen erhalten. Die Rezepturdaten der einzelnen Polyurethan-Basis-Dispersionen der Varianten A bis F sind in der nachstehenden Tabelle 1 zusammengefaßt:

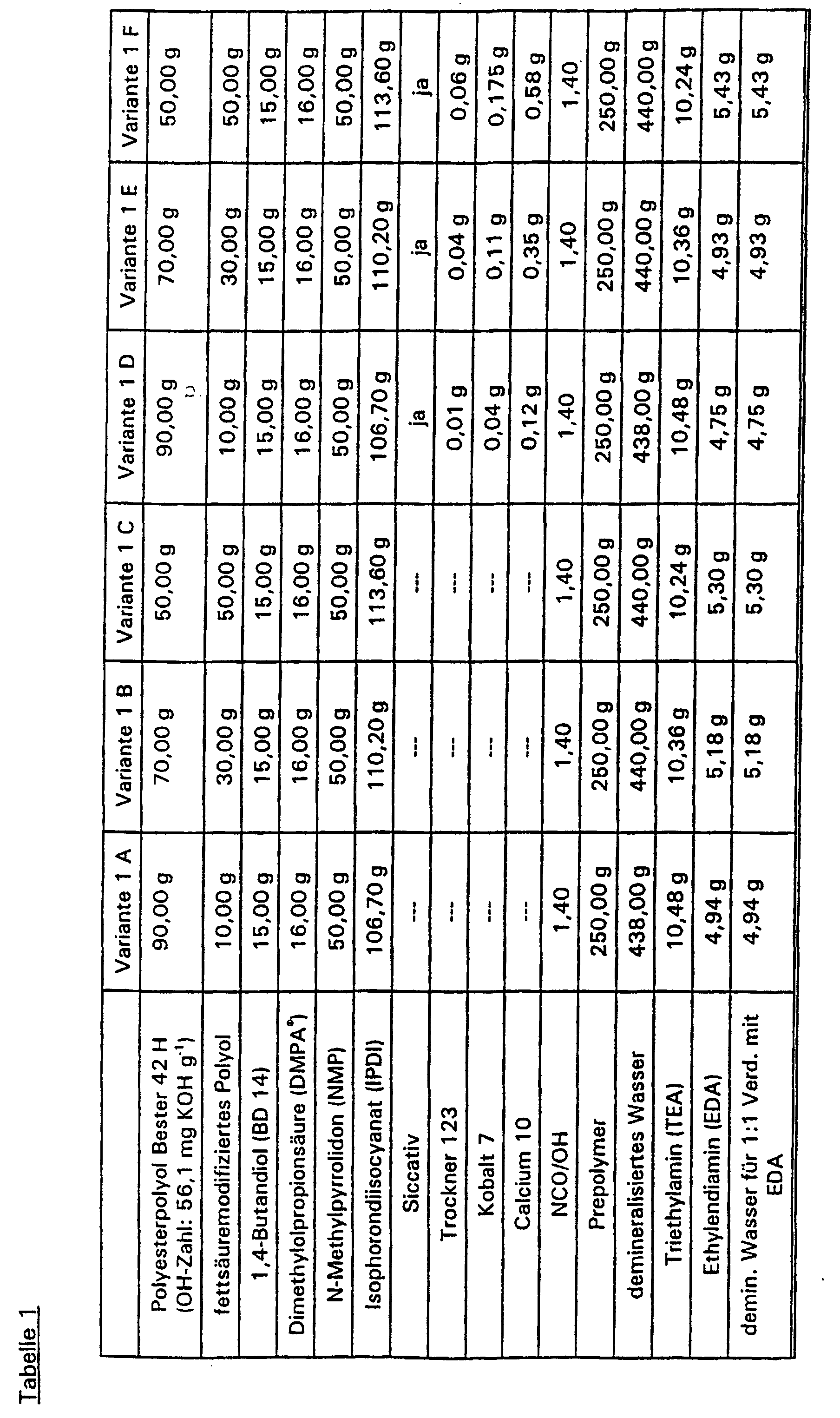

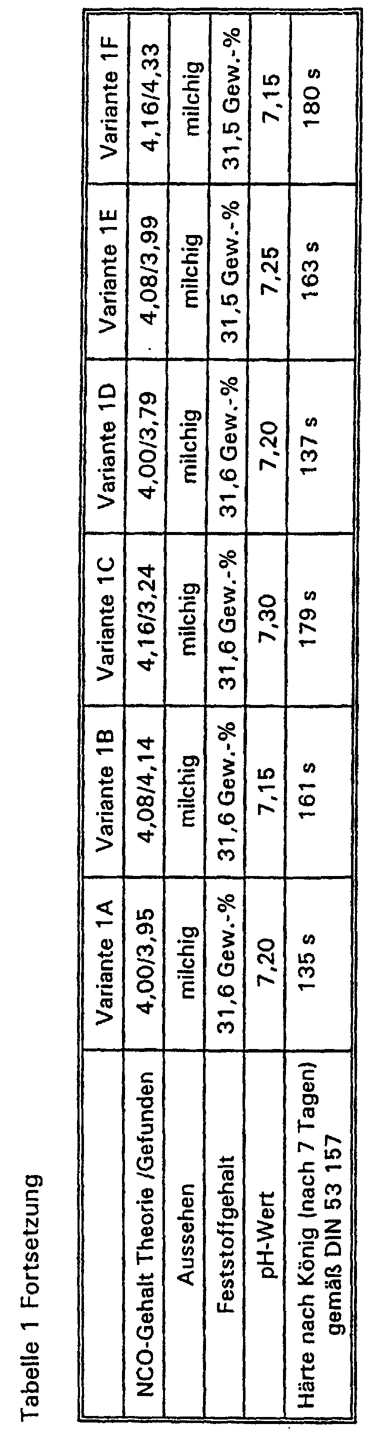

### Polyurethan-Polymer-Hybrid-Dispersion mit hoher Filmhärte

Für die Herstellung der Polyurethan-Polymer-Hybrid-Dispersionen wurde jeweils eine der unter Beispiel 1 vorgestellten Polyurethan-Dispersionen (Varianten A bis F) als Matrix für die Emulsionspolymerisation der olefinischen Monomere verwendet.
Der Hybridisierungsschritt lief folgendermaßen ab:

### Beispiele 2 bis 7:

Die PU-Basis-Dispersion (1) wurde im Reaktionsgefäß bei Raumtemperatur vorgelegt und unter gleichmäßigem Rühren mit Wasser (2) verdünnt. Man fügte wässrige Ammoniak-Lösung (3) hinzu, bis ein pH-Wert von ca. 8,0 erreicht war. n-Butylacrylat (4), Methylmethacrylat (5) und 2,2'-Azoisobutyronitril (6) wurden separat in einem Gefäß bei Raumtemperatur gut vermischt und binnen 90 bis 120 min der PU-Basis-Dispersion hinzugefügt.
Nach vollständiger Zugabe der Monomer-Initiator-Lösung wurde die Dispersion auf 80 bis 82 °C aufgeheizt und bei dieser Temperatur für 5 Stunden gehalten. Anschließend wurde die Dispersion auf 25 °C abgekühlt und durch ein Filter (Porengröße 80 µm) filtriert. Es wurde eine feinteilige milchig opake Hybrid-Dispersion mit einem Feststoffgehalt von ca. 39 % erhalten.

Der Hybridisierungsschritt der Beispiele 3 bis 7 lief analog zu der in Beispiel 2 beschriebenen Verfahrensweise ab. Die verwendeten Substanzen sind in nachstehender Tabelle 2 aufgeführt:

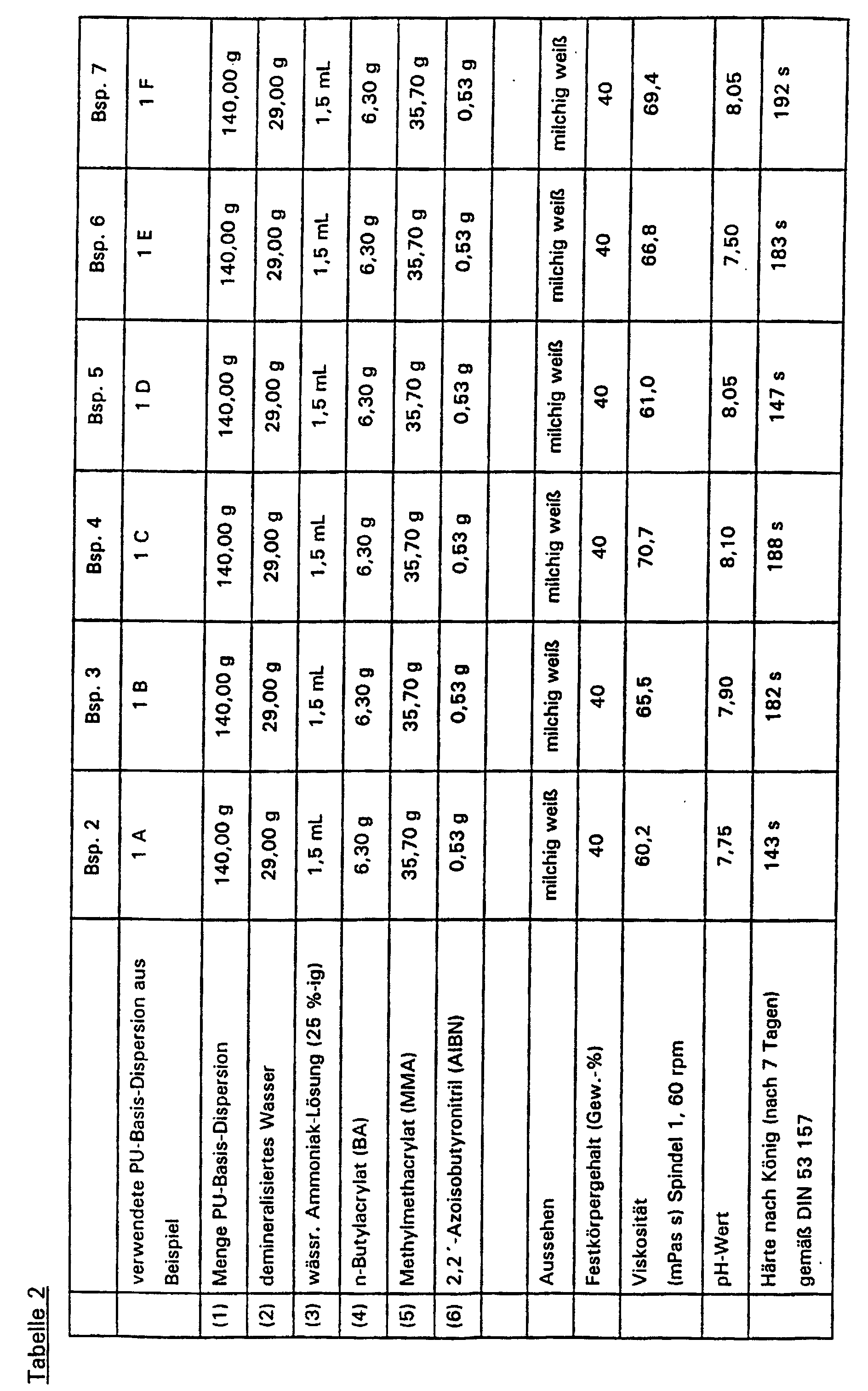

## Patentansprüche

1. Selbstvernetzende Polyurethan-Polymer-Hybrid-Dispersion auf Basis von oxidativ trocknenden Polyolen mit hoher Filmhärte,
**dadurch gekennzeichnet,**
**daß** sie die Umsetzungskomponenten
(A) eine zur oxidativen Trockung befähigte ungesättigte Fettsäure-Komponente mit mindestens zwei gegenüber Polyisocyanaten reaktiven Hydroxylgruppen,
(B) eine Polyol-Komponente bestehend aus
(i) einem hochmolekularen Polyol mit mindestens zwei gegenüber Polyisocyanaten reaktiven Hydroxylgruppen und einer Molmasse von 500 bis 4000 Dalton,
(ii) einem niedermolekularen Polyol mit mindestens zwei gegenüber Polyisocyanaten reaktiven Hydroxylgruppen und einer Molmasse von 50 bis 500 Dalton,
(iii) einem niedermolekularen und anionisch modifizierbaren Polyol mit mindestens zwei gegenüber Polyisocyanaten reaktiven Hydroxylgruppen sowie mindestens einer gegenüber Polyisocyanaten inerten Carboxylgruppe und einer Molmasse von 100 bis 200 Dalton,
(C) eine Polyisocyanat-Komponente,
(D) gegebenenfalls eine Siccativ-Komponente,
(E) gegebenenfalls eine Lösemittel-Komponente bestehend aus
(i) mindestens einem gegenüber Polyisocyanaten inerten organischen Lösemittel und/oder
(ii) einem gegenüber Polyisocyanaten inerten Reaktivverdünner bestehend aus mindestens einer gegenüber Polyiso-cyanaten inerten organischen Verbindung mit einer oder mehreren radikalisch polymerisierbaren Doppelbindungen,
(F) eine Neutralisations-Komponente bestehend aus mindestens einer anorganischen oder organischen Base,
(G) eine Kettenverlängerungs-Komponente bestehend aus mindestens einem Polyamin mit zwei oder mehr gegenüber Polyisocyanaten reaktiven Aminogruppen,
(H) eine Monomer-Komponente bestehend aus mindestens einem Monomer mit einer oder mehreren radikalisch polymerisierbaren Doppelbindungen,
(I) eine radikalische Initiator-Komponente
sowie als Reste Wasser enthält.

2. Selbstvernetzende Polyurethan-Polymer-Hybrid-Dispersion nach Anspruch 1,
**dadurch gekennzeichnet,**
**daß** sie die Umsetzungskomponenten
(A) 0,3 bis 12 Gew.-% einer zur oxidativen Trocknung befähigten ungesättigten Fettsäure-Komponente bestehend aus mindestens einem ungesättigten Fettsäurederivat bzw. Fettsäureepoxyester mit mindestens zwei gegenüber Polyisocyanaten reaktiven Hydroxylgruppen,
(B) 1,5 bis 18 Gew.-% einer Polyol-Komponente bestehend aus
(i) 0,5 bis 12 Gew.-% eines hochmolekularen Polyols mit mindestens zwei gegenüber Polyisocyanaten reaktiven Hydroxylgruppen und einer Molmasse von 500 bis 4000 Dalton,
(ii) 0,5 bis 3,0 Gew.-% eines niedermolekularen Polyols mit mindestens zwei gegenüber Polyisocyanaten reaktiven Hydroxylgruppen und einer Molmasse von 50 bis 500 Dalton,
(iii) 0,5 bis 3,0 Gew.-% eines niedermolekularen und anionisch modifizierbaren Polyols mit mindestens zwei gegenüber Polyisocyanaten reaktiven Hydroxylgruppen sowie mindestens einer gegenüber Polyisocyanaten inerten Carboxylgruppe und einer Molmasse von 100 bis 200 Dalton,
(C) 3,5 bis 16 Gew.-% einer Polyisocyanat-Komponente bestehend aus einem oder mehreren Polyisocyanaten, Polyisocyanat-Homologen und/oder Polyisocyanat-Derivaten mit zwei oder mehr aliphatischen und/oder aromatischen Isocyanatgruppen,
(D) 0 bis 2 Gew.-% einer Siccativ-Komponente bestehend aus mindestens einem wasseremulgierbaren Aktiv- oder Hilfstrockenstoff,
(E) 0 bis 8 Gew.-% einer Lösemittel-Komponente, bestehend aus
(i) mindestens einem gegenüber Polyisocyanaten inerten organischen Lösemittel und/oder
(ii) einem gegenüber Polyisocyanaten inerten Reaktivverdünner, bestehend aus mindestens einer gegenüber Polyisocyanaten inerten organischen Verbindung mit einer oder mehreren radikalisch polymerisierbaren Doppelbindungen,
(F) 0,3 bis 2,5 Gew.-% einer Neutralisations-Komponente bestehend aus mindestens einer anorganischen oder organischen Base,
(G) 0,1 bis 1,5 Gew-% einer Kettenverlängerungs-Komponente bestehend aus mindestens einem Polyamin mit zwei oder mehr gegenüber Polyisocyanaten reaktiven Aminogruppen,
(H) 5 bis 45 Gew.-% einer Monomer-Komponente bestehend aus mindestens einem Monomer mit einer oder mehreren radikalisch polymerisierbaren Doppelbindungen,
(I) 0,05 bis 2 Gew.-% einer initiator-Komponente bestehend aus mindestens einem lipophilen Radikal-Initiator,
sowie als Rest Wasser enthält.

3. Polyurethan-Polymer-Hybrid-Dispersion nach Anspruch 1 oder 2,
**dadurch gekennzeichnet,**
**daß** die Komponente (A) ein Umsetzungsprodukt aus ungesättigten Fettsäuren und aliphatischen und/oder aromatischen Epoxidharzen bzw. Polyepoxiden mit zwei oder drei gegenüber Fettsäuren reaktiven Epoxidgruppen umfaßt.

4. Polyurethan-Polymer-Hybrid-Dispersion nach einem der Ansprüche 1 bis 3,
**dadurch gekennzeichnet,**
**daß** die Komponente (A) ein Umsetzungsprodukt aus maximal dreifach ungesättigten Fettsäuren mit einer lodzahl von 170 bis 190 g I₂·(100 g)⁻¹ sowie aliphatischen und/oder aromatischen Epoxidharzen bzw. Polyepoxiden mit einer Epoxidzahl > 0,5 eq·(100 g)⁻¹ umfaßt.

5. Polyurethan-Polymer-Hybrid-Dispersion nach einem der Ansprüche 1 bis 4,
**dadurch gekennzeichnet,**
**daß** die Komponente (A) eine lodzahl im Bereich von 100 bis 150 g I₂·(100 g)⁻¹, eine Hydroxylzahl von 120 bis 150 mg KOH·g⁻¹ sowie eine Säurezahl von 1 bis 5 mg KOH·g⁻¹ besitzt.

6. Polyurethan-Polymer-Hybrid-Dispersion nach einem der Ansprüche 1 bis 5,
**dadurch gekennzeichnet,**
**daß** die Komponente (A) ein Addukt aus Leinölfettsäure und Bisphenol-A-diglycidether umfaßt.

7. Polyurethan-Polymer-Hybrid-Dispersion nach einem der Ansprüche 1 bis 6,
**dadurch gekennzeichnet,**
**daß** die Komponente (B) (i) lineare difunktionelle Polyester-Polyole der Molmasse 1000 bis 3000 Dalton umfaßt.

8. Polyurethan-Polymer-Hybrid-Dispersion nach Anspruch 7,
**dadurch gekennzeichnet,**
**daß** die Komponente (B) (i) difunktionelle Polyester-Polyole auf Basis von Adipinsäure, 1,4-Butylenglykol und Ethylenglykol umfaßt.

9. Polyurethan-Polymer-Hybrid-Dispersion nach einem der Ansprüche 1 bis 8,
**dadurch gekennzeichnet,**
**daß** die Komponente (B) (ii) 1,4-Butylenglykol umfaßt.

10. Polyurethan-Polymer-Hybrid-Dispersion nach einem der Ansprüche 1 bis 9,
**dadurch gekennzeichnet,**
**daß** die Komponente (B) (ii) 1,4-Butylenglykol in Kombination mit Trimethylolpropan umfaßt.

11. Polyurethan-Polymer-Hybrid-Dispersion nach einem der Ansprüche 1 bis 10,
**dadurch gekennzeichnet,**
**daß** die Komponente (B) (iii) eine Bishydroxylalkancarbonsäure, insbesondere Dimethylolpropionsäure, umfaßt.

12. Polyurethan-Polymer-Hybrid-Dispersion nach einem der Ansprüche 1 bis 11,
**dadurch gekennzeichnet,**
**daß** die Komponente (C) Isophorondiisocyanat umfaßt.

13. Polyurethan-Polymer-Hybrid-Dispersion nach einem der Ansprüche 1 bis 12,
**dadurch gekennzeichnet,**
**daß** die Siccativ-Komponente (D) Metallseifen oder Metallsalze umfaßt, die aus organometallischen und in organischen Löse- und Bindemitteln löslichen Verbindungen bestehen und den oxidativen Trocknungsprozeßvonfettsäuremodifizierten Polyolen beschleunigen.

14. Polyurethan-Polymer-Hybrid-Dispersion nach einem der Ansprüche 1 bis 13,
**dadurch gekennzeichnet,**
**daß** die Lösemittel-Komponente (E) (i) hochsiedende und hydrophile Verbindungen umfaßt.

15. Polyurethan-Polymer-Hybrid-Dispersion nach einem der Ansprüche 1 bis 14,
**dadurch gekennzeichnet,**
**daß** die Lösemittel-Komponente (E) (i) N-Methylpyrrolidon umfaßt.

16. Polyurethan-Polymer-Hybrid-Dispersion nach einem der Ansprüche 1 bis 15,
**dadurch gekennzeichnet,**
**daß** die Lösemittel-Komponente (E) (ii) Polyethylenglykole mit einer oder mehreren radikalisch polymerisierbaren Doppelbindungen umfaßt.

17. Polyurethan-Polymer-Hybrid-Dispersion nach Anspruch 16,
**dadurch gekennzeichnet,**
**daß** die Lösemittel-Komponente (E) (ii) Methylpolyethylenglykolmethacrylate mit 2 bis 20 Ethylenglykoleinheiten umfaßt.

18. Polyurethan-Polymer-Hybrid-Dispersion nach einem der Ansprüche 1 bis 17,
**dadurch gekennzeichnet,**
**daß** die Neutralisations-Komponente (F) Ammoniak, tertiäre Amine und/oder Alkalihydroxide umfaßt.

19. Polyurethan-Polymer-Hybrid-Dispersion nach Anspruch 18,
**dadurch gekennzeichnet,**
**daß** die Neutralisations-Komponente (F) Triethylamin umfaßt.

20. Polyurethan-Polymer-Hybrid-Dispersion nach einem der Ansprüche 1 bis 19,
**dadurch gekennzeichnet,**
**daß** die Kettenverlängerungs-Komponente (G) ein difunktionelles primäres Amin umfaßt.

21. Polyurethan-Polymer-Hybrid-Dispersion nach Anspruch 20,
**dadurch gekennzeichnet,**
**daß** das difunktionelle primäre Amin 1,2-Diaminoethan ist.

22. Polyurethan-Polymer-Hybrid-Dispersion nach einem der Ansprüche 1 bis 21,
**dadurch gekennzeichnet,**
**daß** die Komponente (G) 20 bis 80 Gew.-% vorzugsweise ca. 50 Gew.-%, an Dispergiermedium enthält.

23. Polyurethan-Polymer-Hybrid-Dispersion nach einem der Ansprüche 1 bis 22,
**dadurch gekennzeichnet,**
**daß** der Feststoffgehalt des Polyurethan-Polymers bestehend aus den Komponenten (A) bis (G) 20 bis 60 Gew.-%, vorzugsweise 30 bis 50 Gew.-%, bezogen auf das Gesamtgewicht der Polyurethan-Dispersion beträgt.

24. Polyurethan-Polymer-Hybrid-Dispersion nach einem der Ansprüche 1 bis 23,
**dadurch gekennzeichnet,**
**daß** die mittlere Partikelgröße der Mizellen des Polyurethan-Polymers bestehend aus den Komponenten (A) bis (G) 50 bis 500 nm, vorzugsweise 100 bis 200 nm, beträgt.

25. Polyurethan-Polymer-Hybrid-Dispersion nach einem der Ansprüche 1 bis 24,
**dadurch gekennzeichnet,**
**daß** das Polyurethan-Polymer bestehend aus den Komponenten (A) bis (G) eine mittlere Molmasse von 25 000 bis 100 000 Dalton aufweist.

26. Polyurethan-Polymer-Hybrid-Dispersion nach einem der Ansprüche 1 bis 25,
**dadurch gekennzeichnet,**
**daß** die Komponente (H) aus Acrylsäure und deren Derivaten, Methacrylsäure und deren Derivaten und/oder Styrol und dessen Derivaten ausgewählt ist.

27. Polyurethan-Polymer-Hybrid-Dispersion nach einem der Ansprüche 1 bis 26,
**dadurch gekennzeichnet,**
**daß** die Komponente (H) Kombinationen von 75 bis 85 Gew.-% Methylmethacrylat, 5 bis 15 Gew.-% n-Butylacrylat und 10 bis 20 Gew.-% an weiteren Monomeren enthält.

28. Polyurethan-Polymer-Hybrid-Dispersion nach einem der Ansprüche 1 bis 27,
**dadurch gekennzeichnet,**
**daß** die Komponente (H) eine Kombination aus 85 Gew.-% Methylmethacrylat und 15 Gew.-% n-Butylacrylat oder eine Kombination aus 75 Gew.-% Methylmethacrylat, 15 Gew.-% n-Butylacrylat und 10 Gew.-% Styrol enthält.

29. Polyurethan-Polymer-Hybrid-Dispersion nach einem der Ansprüche 1 bis 28,
**dadurch gekennzeichnet,**
**daß** die Komponente (I) einen Radikal-Initiator mit einer oder mehreren Azo- oder Peroxogruppen umfaßt.

30. Polyurethan-Polymer-Hybrid-Dispersion nach einem der Ansprüche 1 bis 29,
**dadurch gekennzeichnet,**
**daß** die Komponente (I) einen Radikal-Initiator umfaßt, der bei einer Zerfallstemperatur innerhalb des Bereichs von 40 bis 120°C, vorzugsweise von 70 bis 90°C, eine Halbwertszeit von 1 Stunde aufweist.

31. Polyurethan-Polymer-Hybrid-Dispersion nach einem der Ansprüche 1 bis 30,
**dadurch gekennzeichnet,**
**daß** die Komponente (I) 2,2'-Azobisisobutyronitril umfaßt.

32. Polyurethan-Polymer-Hybrid-Dispersion nach einem der Ansprüche 1 bis 31,
**dadurch gekennzeichnet,**
**daß** der Feststoffgehalt des Polyurethan-Hybrid-Polymers 20 bis 60 Gew.-%, vorzugsweise auf 30 bis 50 Gew.-%, bezogen auf das Gesamtgewicht der Polyurethan-Polymer-Hybrid-Dispersion beträgt.

33. Polyurethan-Polymer-Hybrid-Dispersion nach einem der Ansprüche 1 bis 32,
**dadurch gekennzeichnet,**
**daß** das Verhältnis der anteiligen Feststoffgehalte aus Polyurethan-Harz und Polymer-Harz 20 bis 80 zu 80 bis 20 Gew.-%, vorzugsweise 40 bis 60 zu 60 bis 40 Gew.-%, und besonders bevorzugt ca. 50 zu 50 Gew.-% beträgt.

34. Polyurethan-Polymer-Hybrid-Dispersion nach einem der Ansprüche 1 bis 33,
**dadurch gekennzeichnet,**
**daß** die mittlere Partikelgröße der Mizellen des Polyurethan-Hybrid-Polymers 50 bis 500 nm, vorzugsweise 50 bis 250 nm, beträgt.

35. Polyurethan-Polymer-Hybrid-Dispersion nach einem der Ansprüche 1 bis 34,
**dadurch gekennzeichnet,**
**daß** das Polyurethan-Hybrid-Polymer eine mittlere Molmasse von 25 000 bis 250 000 Dalton aufweist.

36. Verfahren zur Herstellung einer Polyurethan-Polymer-Hybrid-Dispersion nach einem der Ansprüche 1 bis 35,
**dadurch gekennzeichnet,**
**daß** in der Reaktionsstufe (a) zunächst eine Polyurethan-Basis-Dispersion hergestellt wird, wobei
(a1) die Fettsäure-Komponente (A), die Polyol-Komponenten (B)(i), (B)(ii) und (B)(iii) mit einer Polyisocyanat-Komponente (C) gegebenenfalls in Gegenwart einer Siccativ-Komponente (D) sowie der Lösemittel-Komponente (E) und gegebenenfalls in Gegenwart eines Katalysators zu einem Polyurethan-Prepolymer umgesetzt werden,
(a2) das Polyurethan-Prepolymer aus Stufe (a1) mit dem Dispergiermedium und der Neutralisations-Komponente (F) vermischt wird und anschließend
(a3) die Polyurethan-Prepolymer-Dispersion aus Stufe (a2) mit der Kettenverlängerungs-Komponente (G) umgesetzt wird,
und dann in der Reaktionsstufe (b) eine Polyurethan-Polymer-Hybrid-Dispersion hergestellt wird, indem
(b1) die Polyurethan-Basis-Dispersion aus Stufe (a3) mit einem vorgefertigen Gemisch aus der Monomer-Komponente (H) und der Initiator-Komponente (I) versetzt wird und anschließend
(b2) durch den thermischen Zerfall der Komponente (I) eine radikalische Polymerisaton der Komponente (H) innerhalb der Mizellen der Polyurethan-Basis-Dispersion durchgeführt wird.

37. Verfahren nach Anspruch 36,
**dadurch gekennzeichnet,**
**daß** in der Reaktionsstufe (a) zunächst eine Polyurethan-Basis-Dispersion hergestellt wird, wobei
(a1) 0,3 bis 12 Gew.-% der zur oxidativen Trocknung befähigten ungesättigten Fettsäure-Komponente (A), 0,5 bis 12 Gew.-% der hochmolekularen Polyol-Komponente (B) (i), 0,5 bis 3,0 Gew.-% der niedermolekularen Polyol-Komponente (B)(ii) sowie 0,5 bis 3,0 Gew.-% des niedermolekularen und anionisch modifizierbaren Polyols (B)(iii) mit 3,5 bis 16 Gew.-% der Polyisocyanat-Komponente (C) gegebenenfalls in Gegenwart von 0 bis 2 Gew.-% der Siccativ-Komponente (D) sowie von 0 bis 6 Gew.-% der Lösemittel-Komponente (E) und gegebenenfalls in Gegenwart eines Katalysators zu einem Polyurethan-Prepolymer umgesetzt werden,
(a2) das Polyurethan-Prepolymer aus Stufe (a1) mit dem Dispergiermedium und 0,3 bis 2,5 Gew.-% der Neutralisations-Komponente (F) vermischt wird und anschließend
(a3) die Polyurethan-Prepolymer-Dispersion aus Stufe (a2) mit 0,1 bis 1,5 Gew.-% der Kettenverlängerungs-Komponente (G) umgesetzt wird
und dann in der Reaktionsstufe (b) eine Polyurethan-Polymer-Hybrid-Dispersion hergestellt wird, indem
(b1) die Polyurethan-Basis-Dispersion aus Stufe (a3) mit einem vorgefertigten Gemisch aus 5 bis 45 Gew.-% der Monomer-Komponente (H) und 0,01 bis 1,5 Gew.-% der Initiator-Komponente (I) versetzt wird und anschließend
(b2) durch den thermischen Zerfall der Komponente (I) eine radikalische Polymerisation der Komponente (H) innerhalb der Mizellen der Polyurethan-Basis-Dispersion durchgeführt wird.

38. Verfahren nach Anspruch 37,
**dadurch gekennzeichnet,**
**daß** die Reaktionsstufe (a1) bei einer Temperatur von 60 bis 120°C, vorzugsweise bei 80 bis 100°C durchgeführt wird.

39. Verfahren nach einem der Ansprüche 36 bis 38,
**dadurch gekennzeichnet,**
**daß** das NCO/OH-Equivalent-Verhältnis der Komponenten (A), (B) und (C) in Reaktionsstufe (a1) auf einen Wert von 1,2 bis 2,0 vorzugsweise 1,4 bis 1,8 eingestellt wird.

40. Verfahren nach einem der Ansprüche 36 bis 39,
**dadurch gekennzeichnet,**
**daß** man die Reaktionsstufe (a1) in Gegenwart von 0,01 bis 1 Gew.-% bezogen auf die Komponenten (A), (B), (C), (D) und (E) eines für Polyadditionsreaktionen an Polyisocyanaten geegneten Katalysators durchführt.

41. Verfahren nach einem der Ansprüche 36 bis 40,
**dadurch gekennzeichnet,**
**daß** die Siccativ-Komponente (D) erst in Reaktionsstufe (a2) im Dispergiermedium vorgelegt wird.

42. Verfahren nach einem der Ansprüche 36 bis 41,
**dadurch gekennzeichnet,**
**daß** eine direkte Neutralisation der Komponente (B)(iii) erfolgt, wobei die Neutralisation-Komponente (F) bereits nach Reaktionsstufe (a1) in das Polyurethan-Prepolymer eingerührt wird.

43. Verfahren nach einem der Ansprüche 36 bis 41,
**dadurch gekennzeichnet,**
**daß** eine indirekte Neutralisation der Komponente (B) (iii) erfolgt, wobei in Schritt (a2) ein die Neutralisations-Komponente (F) enthaltendes Dispergiermedium verwendet wird.

44. Verfahren nach einem der Ansprüche 36 bis 43,
**dadurch gekennzeichnet,**
**daß** die Reaktionsstufe (a2) bei einer Temperatur von 30 bis 60°C, vorzugsweise bei 40 bis 50°C, durchgeführt wird.

45. Verfahren nach einem der Ansprüche 36 bis 44,
**dadurch gekennzeichnet,**
**daß** die Komponente (F) in einer solchen Menge zugegeben wird, daß der Neutralisationsgrad bezogen auf die freien Carboxylgruppen des Polyurethan-Prepolymers bei 70 bis 100 Equivalent-%, vorzugsweise bei 90 bis 100 Equivalent-%, liegt.

46. Verfahren nach einem der ansprüche 36 bis 45,
**dadurch gekennzeichnet,**
**daß** die Reaktionsstufe (a3) bei einer Temperatur von 20 bis 60°C, insbesondere bei 30 bis 50°C, durchgeführt wird.

47. Verfahren nach einem der Ansprüche 36 bis 46,
**dadurch gekennzeichnet,**
**daß** die Komponente (G) in der Reaktionsstufe (a3) gelöst im Dispergiermedium zugesetzt wird.

48. Verfahren nach einem der Ansprüche 36 bis 47,
**dadurch gekennzeichnet,**
**daß** die Komponente (G) in einer solchen Menge eingesetzt wird, daß der Kettenverlängerungsgrad bezogen auf die freien Isocyanatgruppen des Polyurethan-Prepolymers bei 50 bis 100 Equivalent-%, vorzugsweise bei 60 bis 90 Equivalent-%, liegt.

49. Verfahren nach einem der Ansprüche 36 bis 48,
**dadurch gekennzeichnet,**
**daß** die Reaktionsstufe (b1) bei einer Temperatur von 15 bis 35°C, vorzugsweise bei 20 bis 30°C, durchgeführt wird.

50. Verfahren nach einem der Ansprüche 36 bis 49,
**dadurch gekennzeichnet,**
**daß** das lnitiator/Monomer-Molverhältnis der Komponenten (H) und (I) auf Werte von 0,001 bis 0,05 mol-%, vorzugsweise auf 0,008 mol-%, eingestellt wird.

51. Verfahren nach einem der Ansprüche 36 bis 50,
**dadurch gekennzeichnet,**
**daß** die Reaktionsstufe (b2) bei einer Temperatur durchgeführt wird, die innerhalb eines Bereichs von ± 10°C bezogen auf die Temperatur liegt, bei der die Komponente (I) eine Halbwertszeit von 1 Stunde aufweist.

52. Verfahren nach einem der Ansprüche 36 bis 51,
**dadurch gekennzeichnet,**
**daß** die Polymerisation in der Reaktionsstufe (b2) ohne weitere Emulgatoren durchgeführt wird.

53. Verfahren nach einem der Ansprüche 36 bis 52,
**dadurch gekennzeichnet,**
**daß** die Reaktionsstufe (b2) bei einer Temperatur von 80 ± 10°C bei Verwendung von 2,2'-Azobisisobutyronitril als Komponente (I) durchgeführt wird.

54. Verwendung der Polyurethan-Polymer-Hybrid-Dispersionen nach einem der Ansprüche 1 bis 35 als Bindemittel für ein- oder zweikomponentige Lacke, Versiegelungen, Verklebungen und Beschichtungen der Oberflächen von mineralischen Baustoffen, wie z.B. Beton, Holz und Holzwerkstoffen, Metall und Kunststoffen.

## Claims

1. Self-crosslinking polyurethane polymer hybrid dispersion based on oxidatively drying polyols having a high degree of film hardness,
**characterized in that**
it contains the reaction components
(A) an unsaturated fatty acid component capable of oxidative drying and having at least two hydroxyl groups that are reactive towards polyisocyanates,
(B) a polyol component consisting of
(i) a high molecular weight polyol having at least two hydroxyl groups that are reactive towards polyisocyanates and a molar mass of 500 to 4000 Dalton,
(ii) a low molecular weight polyol having at least two hydroxyl groups that are reactive towards polyisocyanates and a molar mass of 50 to 500 Dalton,
(iii) a low molecular weight and anionically modifiable polyol having at least two hydroxyl groups that are reactive towards polyisocyanates and at least one carboxyl group which is inert to polyisocyanates and a molar mass of 100 to 200 Dalton.
(C) a polyisocyanate component
(D) optionally a siccative component
(E) optionally a solvent component consisting of
(i) at least one organic solvent which is inert to polyisocyanates and/or
(ii) a reactive diluent which is inert to polyisocyanates and consists of at least one organic compound which is inert to polyisocyanates and has one or more double bonds that can be polymerized by free radicals,
(F) a neutralization component consisting of at least one inorganic or organic base,
(G) a chain extension component consisting of at least one polyamine having two or more amino groups that are reactive towards polyisocyanates ,
(H) a monomer component consisting of at least one monomer having one or more double bonds that can be polymerized by free radicals,
(I) a free radical initiator component
and contains water as the remainder.

2. Self-crosslinking polyurethane polymer hybrid dispersion as claimed in claim 1,
**characterized in that**
it contains the reaction components
(A) 0.3 to 12 % by weight of an unsaturated fatty acid component capable of oxidative drying and consisting of at least one unsaturated fatty acid derivative or fatty acid epoxy ester having at least two hydroxyl groups that are reactive towards polyisothiocyanates,
(B) 1.5 to 18 % by weight of a polyol component consisting of
(i) 0.5 to 12 % by weight of a high molecular weight polyol having two or more hydroxyl groups that are reactive towards polyisocyanates and a molar mass of 500 to 4000 Dalton,
(ii) 0.5 to 3.0 % by weight of a low molecular polyol having two or more hydroxyl groups that are reactive towards polyisocyanates and a molar mass of 50 to 500 Dalton,
(iii) 0.5 to 3.0 % by weight of a low molecular and anionically modifiable polyol having two or more hydroxyl groups that are reactive towards polyisocyanates and at least one carboxyl group which is inert to polyisocyanates and a molar mass of 100 to 200 Dalton,
(C) 3.5 to 16 % by weight of a polyisocyanate component consisting of one or more polyisocyanates, polyisocyanate homologues or polyisocyanate derivatives having two or more aliphatic and/or aromatic isocyanate groups,
(D) 0 to 2 % by weight of a siccative component consisting of at least one water-emulsifiable active or auxiliary drying agent,
(E) 0 to 8 % by weight of a solvent component consisting of
(i) at least one organic solvent which is inert to polyisocyanates and/or
(ii) a reactive diluent which is inert to polyisocyanates and consists of at least one organic compound which is inert to polyisocyanates and has one or more double bonds that can be polymerized by free radicals,
(F) 0.3 to 2.5 % by weight of a neutralization component consisting of at least one inorganic or organic base,
(G) 0.1 to 1.5 % by weight of a chain extension component consisting of at least one polyamine having two or more amino groups that are reactive towards polyisocyanates,
(H) 5 to 45 % by weight of a monomer component consisting of at least one monomer having one-or more double bonds that can be polymerized by free radicals,
(I) 0.05 to 2 % by weight of an initiator component consisting of at least one lipophilic radical,
and contains water as the remainder.

3. Polyurethane polymer hybrid dispersion as claimed in claim 1 or 2,
**characterized in that**
the component (A) comprises a reaction product of unsaturated fatty acids and aliphatic and/or aromatic epoxide resins or polyepoxides containing two or three epoxide groups that are reactive towards fatty acids.

4. Polyurethane polymer hybrid dispersion as claimed in one of the claims 1 to 3,
**characterized in that** the component (A) is a reaction product of fatty acids that are no more than triply unsaturated and have an iodine number of 170 to 190 g I₂ · (100 g)⁻¹, aliphatic and/or aromatic epoxide resins or polyepoxides having an epoxide number of > 0.5 eq · (100 g)⁻¹.

5. Polyurethane polymer hybrid dispersion as claimed in one of the claims 1 to 4,
**characterized in that**
the component (A) has an iodine number in the range of 100 to 150 g I₂ · (100 g)⁻¹, a hydroxyl number from 120 to 150 mg KOH · g⁻¹ and an acid number of 1 to 5 mg KOH · g⁻¹.

6. Polyurethane polymer hybrid dispersion as claimed in one of the claims 1 to 5,
**characterized in that**
the component (A) comprises an adduct of linseed oil fatty acid and bisphenol A diglycidyl ether.

7. Polyurethane polymer hybrid dispersion as claimed in one of the claims 1 to 6,
**characterized in that**
the component (B) (i) comprises linear difunctional polyester polyols having a molar mass of 1000 to 3000 Dalton.

8. Polyurethane polymer hybrid dispersion as claimed in claim 7,
**characterized in that**
the component (B) (i) comprises difunctional polyester polyols based on adipic acid, 1,4-butylene glycol and ethylene glycol.

9. Polyurethane polymer hybrid dispersion as claimed in one of the claims 1 to 8,
**characterized in that**
the component (B) (ii) comprises 1,4-butylene glycol.

10. Polyurethane polymer hybrid dispersion as claimed in one of the claims 1 to 9,
**characterized in that**
the component (B) (ii) comprises 1,4-butylene glycol in combination with trimethylolpropane.

11. Polyurethane polymer hybrid dispersion as claimed in one of the claims 1 to 10,
**characterized in that**
the component (B) (iii) comprises a bishydroxyalkanecarboxylic acid in particular dimethylolpropionic acid.

12. Polyurethane polymer hybrid dispersion as claimed in one of the claims 1 to 11,
**characterized in that**
the component (C) comprises isophoronediisocyanate.

13. Polyurethane polymer hybrid dispersion as claimed in one of the claims 1 to 12,
**characterized in that**
the siccative component (D) comprises metal soaps or metal salts which are composed of organometallic compounds that are soluble in organic solvents and binders and which accelerate the oxidative drying process of fatty acid-modified polyols.

14. Polyurethane polymer hybrid dispersion as claimed in one of the claims 1 to 13,
**characterized in that**
the solvent component (E) (i) comprises high-boiling and hydrophilic compounds.

15. Polyurethane polymer hybrid dispersion as claimed in one of the claims 1 to 14,
**characterized in that**
the solvent component (E) (i) comprises N-methylpyrrolidone.

16. Polyurethane polymer hybrid dispersion as claimed in one of the claims 1 to 15,
**characterized in that**
the solvent component (E) (ii) comprises polyethylene glycols containing one or more double bonds that can be polymerized by free radicals.

17. Polyurethane polymer hybrid dispersion as claimed in claim 16,
**characterized in that**
the solvent component (E) (ii) comprises methylpolyethylene glycol methacrylates containing 2 to 20 ethylene glycol units.

18. Polyurethane polymer hybrid dispersion as claimed in one of the claims 1 to 17,
**characterized in that**
the neutralization component (F) comprises ammonia, tertiary amines and/or alkali hydroxides.

19. Polyurethane polymer hybrid dispersion as claimed in claim 18,
**characterized in that**
the neutralization component (F) comprises triethylamine.

20. Polyurethane polymer hybrid dispersion as claimed in one of the claims 1 to 19,
**characterized in that**
the chain extension component (G) comprises a difunctional primary amine.

21. Polyurethane polymer hybrid dispersion as claimed in claim 20,
**characterized in that**
the difunctional primary amine is 1,2-diaminoethane.

22. Polyurethane polymer hybrid dispersion as claimed in one of the claims 1 to 21,
**characterized in that**
the component (G) contains 20 to 80 % by weight, preferably ca. 50 % by weight, dispersing medium.

23. Polyurethane polymer hybrid dispersion as claimed in one of the claims 1 to 22,
**characterized in that**
the solids content of the polyurethane polymer consisting of the components (A) to (G) is 20 to 60 % by weight, preferably 30 to 50 % by weight based on the total weight of the polyurethane dispersion.

24. Polyurethane polymer hybrid dispersion as claimed in one of the claims 1 to 23,
**characterized in that**
the mean particle size of the micelles of the polyurethane polymer consisting of the components (A) to (G) is 50 to 500 nm, preferably 100 to 200 nm.

25. Polyurethane polymer hybrid dispersion as claimed in one of the claims 1 to 24,
**characterized in that**
the polyurethane polymer consisting of the components (A) to (G) has an average molar mass of 25,000 to 100,000 Dalton.

26. Polyurethane polymer hybrid dispersion as claimed in one of the claims 1 to 25,
**characterized in that**
the component (H) is selected from acrylic acid and derivatives thereof, methacrylic acid and derivatives thereof and/or styrene and derivatives thereof.

27. Polyurethane polymer hybrid dispersion as claimed in one of the claims 1 to 26,
**characterized in that**
the component (H) contains combinations of 75 to 85 % by weight methylmethacrylate, 5 to 15 % by weight n-butylacrylate and 10 to 20 % by weight of other monomers.

28. Polyurethane polymer hybrid dispersion as claimed in one of the claims 1 to 27,
**characterized in that**
the component (H) contains a combination of 85 % by weight methylmethacrylate and 15 % by weight n-butylacrylate or a combination of 75 % by weight methylmethacrylate, 15 % by weight n-butylacrylate and 10 % by weight styrene.

29. Polyurethane polymer hybrid dispersion as claimed in one of the claims 1 to 28,
**characterized in that**
the component (I) comprises a radical initiator containing one or more azo or peroxo groups.

30. Polyurethane polymer hybrid dispersion as claimed in one of the claims 1 to 29,
**characterized in that**
the component (I) comprises a radical initiator which has a half-life of one hour at a decomposition temperature within the range of 40 to 120°C, preferably 70 to 90°C.

31. Polyurethane polymer hybrid dispersion as claimed in one of the claims 1 to 30,
**characterized in that**
the component (I) comprises 2,2'-azobisisobutyronitrile.

32. Polyurethane polymer hybrid dispersion as claimed in one of the claims 1 to 31,
**characterized in that**
the solids content of the polyurethane hybrid polymer is 20 to 60 % by weight, preferably 30 to 50 % by weight based on the total weight of the polyurethane polymer hybrid dispersion.

33. Polyurethane polymer hybrid dispersion as claimed in one of the claims 1 to 32,
**characterized in that**
the ratio of the proportionate solids contents of polyurethane resin and polymer resin is 20 to 80 : 80 to 20 % by weight, preferably 40 : 60 to 60 : 40 % by weight and particularly preferably ca. 50 : 50 % by weight.

34. Polyurethane polymer hybrid dispersion as claimed in one of the claims 1 to 33,
**characterized in that**
the mean particle size of the micelles of the polyurethane hybrid polymer is 50 to 500 nm, preferably 50 to 250 nm.

35. Polyurethane polymer hybrid dispersion as claimed in one of the claims 1 to 34,
**characterized in that**
the polyurethane hybrid polymer has an average molar mass of 25,000 to 250,000 Dalton.

36. Process for producing a polyurethane polymer hybrid dispersion as claimed in one of the claims 1 to 35,
**characterized in that**
a polyurethane base dispersion is firstly produced in reaction stage (a) in which
(a1) the fatty acid component (A), the polyol components (B) (i), (B) (ii) and (B) (iii) are reacted with a polyisocyanate component (C) optionally in the presence of a siccative component (D) and of a solvent component (E) and optionally in the presence of a catalyst to form a polyurethane prepolymer,
(a2) the polyurethane prepolymer from stage (a1) is mixed with the dispersing medium and the neutralization component (F) and subsequently
(a3) the polyurethane prepolymer dispersion from stage (a2) is reacted with the chain extension component (G)
and then a polyurethane polymer hybrid dispersion is produced in reaction stage (b) by
(b1) adding a prepared mixture of the monomer component (H) and of the initiator component (I) to the polyurethane base dispersion from stage (a3) and subsequently
(b2) carrying out a free radical polymerization of the component (H) within the micelles of the polyurethane base dispersion by thermal decomposition of the component (I).

37. Process as claimed in claim 36,
**characterized in that**
in reaction stage (a) a polyurethane base dispersion is firstly prepared in which
(a1) 0.3 to 12 % by weight of the unsaturated fatty acid component (A) capable of oxidative drying, 0.5 to 12 % by weight of the high molecular weight polyol component (B) (i), 0.5 to 3.0 % by weight of the low molecular weight polyol component (B) (ii) and 0.5 to 3.0 % by weight of the low molecular weight and anionically-modifiable polyol (B) (iii) are reacted with 3.5 to 16 % by weight of the polyisocyanate component (C) optionally in the presence of 0 to 2 % by weight of the siccative component (D) and 0 to 6 % by weight of the solvent component (E) and optionally in the presence of a catalyst to form a polyurethane prepolymer,
(a2) the polyurethane prepolymer from stage (a1) is mixed with the dispersing medium and with 0.3 to 2.5 % by weight of the neutralization component (F) and subsequently
(a3) the polyurethane prepolymer dispersion from stage (a2) is reacted with 0.1 to 1.5 % by weight of the chain extension component (G)
and then a polyurethane polymer hybrid dispersion is prepared in reaction stage (b) by
(b1) adding a prepared mixture of 5 to 45 % by weight of the monomer component (H) and 0.01 to 1.5 % by weight of the initiator component (I) to the polyurethane base dispersion from stage (a3) and subsequently
(b2) carrying out a free-radical polymerization of component (H) within the micelles of the polyurethane base dispersion by thermal decomposition of component (I).

38. Process as claimed in claim 37,
**characterized in that**
the reaction stage (a1) is carried out at a temperature of 60 to 120°C, preferably at 80 to 100°C.

39. Process as claimed in one of the claims 36 to 38,
**characterized in that**
the NCO/OH equivalent ratio of components (A), (B) and (C) in reaction stage (a1) is adjusted to a value of 1.2 to 2.0, preferably 1.4 to 1.8.

40. Process as claimed in one of the claims 36 to 39,
**characterized in that**
the reaction stage (a1) is carried out in the presence of 0.01 to 1 % by weight based on the components (A), (B), (C), (D) and (E) of a suitable catalyst for polyaddition reactions on polyisocyanates.

41. Process as claimed in one of the claims 36 to 40,
**characterized in that**
the siccative component (D) is firstly added to the dispersing medium in reaction stage (a2).

42. Process as claimed in one of the claims 36 to 41,
**characterized in that**
the component (B) (iii) is directly neutralized by already stirring the neutralization component (F) into the polyurethane prepolymer after reaction stage (a1).

43. Process as claimed in one of the claims 36 to 41,
**characterized in that**
the component (B) (iii) is indirectly neutralized by using a dispersing medium containing the neutralization component (F) in step (a2).

44. Process as claimed in one of the claims 36 to 43,
**characterized in that**
the reaction stage (a2) is carried out at a temperature of 30 to 60°C, preferably at 40 to 50°C.

45. Process as claimed in one of the claims 36 to 44,
**characterized in that**
the component (F) is added in an amount such the degree of neutralization based on the free carboxyl groups of the polyurethane prepolymer is 70 to 100 equivalent %, preferably 90 to 100 equivalent %.

46. Process as claimed in one of the claims 36 to 45,
**characterized in that**
the reaction stage (a3) is carried out at a temperature of 20 to 60°C, in particular at 30 to 50°C.

47. Process as claimed in one of the claims 36 to 46,
**characterized in that**
the component (G) is added in reaction stage (a3) dissolved in the dispersing medium.

48. Process as claimed in one of the claims 36 to 47,
**characterized in that**
the component (G) is added in an amount such that the degree of chain extension based on the free isocyanate groups of the polyurethane prepolymer is 50 to 100 equivalent %, in particular 60 to 90 equivalent %.

49. Process as claimed in one of the claims 36 to 48,
**characterized in that**
the reaction stage (b1) is carried out at a temperature of 15 to 35°C, preferably at 20 to 30°C.

50. Process as claimed in one of the claims 36 to 49,
**characterized in that**
the initiator/monomer molar ratio of components (H) and (I) is adjusted to values of 0.001 to 0.05 mol %, preferably of 0.008 mol %.

51. Process as claimed in one of the claims 36 to 50,
**characterized in that**
the reaction stage (b2) is carried out at a temperature which is within a range of ± 10°C relative to the temperature at which component (I) has a half-life of one hour.

52. Process as claimed in one of the claims 36 to 51,
**characterized in that**
the polymerization in reaction stage (b2) is carried out without further emulsifiers.

53. Process as claimed in one of the claims 36 to 52,
**characterized in that**
the reaction stage (b2) is carried out at a temperature of 80 ± 10°C using 2,2'-azobisisobutyronitrile as component (I).

54. Use of the polyurethane polymer hybrid dispersions as claimed in one of the claims 1 to 53 as binders for single or two-component paints, seals, adhesive bonds and coatings on surfaces of mineral building materials such as concrete, wood, wood-based materials, metals and plastics.

## Revendications

1. Dispersion hybride polymère polyuréthane autoréticulante à base de polyols siccatifs par oxydation à dureté de film élevée,
**caractérisée en ce que** les composants de la réaction contiennent
(A) un composant acide gras insaturé apte à la dessiccation oxydative comportant au moins deux groupes hydroxyle réactifs vis à vis des polyisocyanates,
(B) un composant polyol constitué
(i) d'un polyol de masse moléculaire élevée comportant au moins deux groupes hydroxyle réactifs vis à vis des polyisocyanates et possédant une masse molaire comprise entre 500 et 4 000 daltons,
(ii) d'un polyol de faible masse moléculaire comportant au moins deux groupes hydroxyle réactifs vis à vis des polyisocyanates et possédant une masse molaire comprise entre 50 et 500 daltons,
(iii) d'un polyol de faible masse moléculaire et modifiable au niveau anionique comportant au moins deux groupes hydroxyle réactifs vis à vis des polyisocyanates ainsi qu'au moins un groupe carboxyle inerte vis-à-vis des polyisocyanates et possédant une masse molaire comprise entré 100 et 200 daltons,
(C) un composant polyisocyanate,
(D) éventuellement un composant dessiccateur,
(E) éventuellement un composant solvant constitué
(i) d'au moins un solvant organique inerte vis à vis des polyisocyanates et/ou
(ii) d'un diluant réactionnel inerte vis à vis des polyisocyanates constitué d'au moins un composé organique inerte vis à vis des polyisocyanates et possédant une ou plusieurs doubles liaisons polymérisables par voie radicalaire,
(F) un composant de neutralisation constitué d'au moins une base organique ou inorganique,
(G) un composant d'allongement de chaîne constitué d'au moins une polyamine comportant deux ou plusieurs groupes amino réactifs vis à vis des polyisocyanates,
(H) un composant monomère constitué d'au moins un monomère possédant une ou plusieurs doubles liaisons polymérisables par voie radicalaire,
(I) un composant initiateur radicalaire
ainsi que de l'eau en résidu.

2. Dispersion hybride polymère polyuréthane autoréticulante selon la revendication 1,
**caractérisée en ce que** les composants de la réaction contiennent
(A) 0,3 à 12 % en poids d'un composant acide gras insaturé apte à la dessiccation oxydative constitué d'au moins un dérivé d'acide gras insaturé, éventuellement d'un ester époxy d'acide gras comportant au moins deux groupes hydroxyle réactifs vis à vis des polyisocyanates,
(B) 1,5 à 18 % en poids d'un composant polyol constitué
(i) de 0,5 à 12 % en poids d'un polyol de masse moléculaire élevée comportant au moins deux groupes hydroxyle réactifs vis à vis des polyisocyanates et possédant une masse molaire comprise entre 500 et 4 000 daltons,
(ii) de 0,5 à 3,0 % en poids d'un polyol de faible masse moléculaire comportant au moins deux groupes hydroxyle réactifs vis à vis des polyisocyanates et possédant une masse molaire comprise entre 50 et 500 daltons,
(iii) de 0,5 à 3,0% en poids d'un polyol de faible masse moléculaire modifiable au niveau anionique possédant au moins deux groupes hydroxyle réactifs vis à vis des polyisocyanates ainsi qu'au moins un groupe carboxyle inerte vis à vis des polyisocyanates et possédant une masse molaire comprise entre 100 et 200 daltons,
(C) 3,5 à 16 % en poids d'un composant polyisocyanate constitué d'un ou plusieurs polyisocyanates, homologues de polyisocyanates et/ou dérivés de polyisocyanates comportant deux ou plusieurs groupes isocyanate aliphatiques et/ou aromatiques,
(D) 0 à 2 % en poids d'un composant dessiccateur constitué d'au moins un produit desséchant actif ou auxiliaire émulsifiable à l'eau,
(E) 0 à 8 % en poids d'un composant solvant constitué
(i) d'au moins un solvant organique inerte vis à vis des polyisocyanates et/ou
(ii) d'un diluant réactionnel inerte vis à vis des polyisocyanates constitué d'au moins un composé organique inerte vis à vis des polyisocyanates et possédant une ou plusieurs doubles liaisons polymérisables par voie radicalaire,
(F) 0,3 à 2,5 % en poids d'un composant de neutralisation constitué d'au moins une base organique ou inorganique,
(G) 0,1 à 1,5 % en poids d'un composant d'allongement de chaîne constitué d'au moins une polyamine comportant deux ou plusieurs groupes amino réactifs vis à vis des polyisocyanates,
(H) 5 à 45 % en poids d'un composant monomère constitué d'au moins un monomère possédant une ou plusieurs doubles liaisons polymérisables par voie radicalaire,
(I) 0,05 à 2 % en poids d'un composant initiateur constitué d'au moins un initiateur radicalaire lipophile ainsi que de l'eau en résidu.

3. Dispersion hybride polymère polyuréthane selon la revendication 1 ou 2
**caractérisée en ce que**
le composant (A) comprend un produit issu de la réaction d'acides gras insaturés et de résines époxy, éventuellement polyépoxy, aliphatiques et/ou aromatique possédant deux ou trois groupes époxy réactifs vis à vis des acides gras.

4. Dispersion hybride polymère polyuréthane selon l'une des revendications 1 à 3
**caractérisée en ce que** le composant (A) comprend un produit issu de la réaction d'acides gras au maximum triplement insaturés présentant un indice d'iode compris entre 170 et 190 g I₂ (100g)⁻¹ et de résines époxy, éventuellement polyépoxy, aliphatiques et/ou aromatiques présentant un indice d'époxy > 0,5 eq (100 g)⁻¹.

5. Dispersion hybride polymère polyuréthane selon l'une des revendications 1 à 4
**caractérisée en ce que** le composant (A) possède un indice d'iode situé dans la plage comprise entre 100 et 150 g I₂ (100g)⁻¹, un indice d'hydroxyle dans la plage comprise entre 120 et 150 mg KOH g⁻¹ ainsi qu'un indice d'acidité dans la plage comprise entre 1 et 5 mg KOH g⁻¹.

6. Dispersion hybride polymère polyuréthane selon l'une des revendications 1 à 5
**caractérisée en ce que** le composant (A) comprend un produit d'addition constitué d'un acide gras de l'huile de lin et d'éther bisphénol-A-diglycide.

7. Dispersion hybride polymère polyuréthane selon l'une des revendications 1 à 6
**caractérisée en ce que** le composant (B) (i) comprend des polyols polyesters linéaires difonctionnels de masse molaire comprise entre 1 000 et 3 000 daltons

8. Dispersion hybride polymère polyuréthane selon la revendication 7
**caractérisée en ce que** le composant (B) (i) comprend des polyols polyesters difonctionnels à base d'acide adipique de 1,4-butylène glycol et d'éthylèneglycol.

9. Dispersion hybride polymère polyuréthane selon l'une des revendications 1 à 8
**caractérisée en ce que** le composant (B) (ii) comprend du 1,4-butylène glycol.

10. Dispersion hybride polymère polyuréthane selon l'une des revendications 1 à 9
**caractérisée en ce que** le composant (B) (ii) comprend du 1,4-butylène glycol combiné à du triméthylolpropane.

11. Dispersion hybride polymère polyuréthane selon l'une des revendications 1 à 10
**caractérisée en ce que** le composant (B) (iii) comprend un acide alcane bishydroxy carboxylique, en particulier de l'acide propionique diméthylol.

12. Dispersion hybride polymère polyuréthane selon l'une des revendications 1 à 11
**caractérisée en ce que** le composant (C) comprend du diisocyanate d'isophorone.

13. Dispersion hybride polymère polyuréthane selon l'une des revendications 1 à 12
**caractérisée en ce que** le composant dessiccateur(D) comprend des savons métalliques ou des sels métalliques qui sont constitués par des composés organométalliques solubles dans des solvants et des liants organiques et qui accélèrent le processus de dessiccation des acides gras polyols modifiés.

14. Dispersion hybride polymère polyuréthane selon l'une des revendications 1 à 13
**caractérisée en ce que** le composant solvant (E) (i) comprend des composés lourds et hydrophiles.

15. Dispersion hybride polymère polyuréthane selon l'une des revendications 1 à 14
**caractérisée en ce que** le composant solvant (E) (i) comprend du N-méthylpyrrolidon.

16. Dispersion hybride polymère polyuréthane selon l'une des revendications 1 à 15
**caractérisée en ce que** le composant solvant (E) (ii) comprend des polyéthylèneglycols possédant une ou plusieurs doubles liaisons polymérisables par voie radicalaire.

17. Dispersion hybride polymère polyuréthane selon la revendication 16
**caractérisée en ce que** le composant solvant (E) (ii) comprend du méthacrylate de méthylpolyéthylèneglycol présentant 2 à 20 unités d'éthylèneglycol.

18. Dispersion hybride polymère polyuréthane selon l'une des revendications 1 à 17
**caractérisée en ce que** le composant de neutralisation (F) comprend de l'ammoniac, des amines tertiaires et/ou des hydroxydes alcalins.

19. Dispersion hybride polymère polyuréthane selon la revendication 18
**caractérisée en ce que** le composant de neutralisation (F) comprend de la triéthylamine.

20. Dispersion hybride polymère polyuréthane selon l'une des revendications 1 à 19
**caractérisée en ce que** le composant d'allongement de chaîne (G) comprend une amine primaire difonctionnelle.

21. Dispersion hybride polymère polyuréthane selon la revendication 20
**caractérisée en ce que** l'amine primaire difonctionnelle est du diamino-1,2-éthane.

22. Dispersion hybride polymère polyuréthane selon l'une des revendications 1 à 21
**caractérisée en ce que** le composant (G) contient 20 à 80 % en poids, de préférence environ 50 % en poids, d'agent dispersant.

23. Dispersion hybride polymère polyuréthane selon l'une des revendications 1 à 22
**caractérisée en ce que** la teneur en matières solides du polymère polyuréthane constitué par les composants (A) à (G) est comprise entre 20 et 60 % en poids, de préférence entre 30 et 50 % en poids, par rapport au poids total de la dispersion de polyuréthane.

24. Dispersion hybride polymère polyuréthane selon l'une des revendications 1 à 23
**caractérisée en ce que** la taille moyenne de particule des micelles du polymère polyuréthane constitué par les composants (A) à (G) est comprise entre 50 et 500 nm, de préférence entre 100 et 200 nm.

25. Dispersion hybride polymère polyuréthane selon l'une des revendications 1 à 24
**caractérisée en ce que** le polymère polyuréthane constitué par les composants (A) à (G) présente une masse molaire comprise entre 25 000 et 100 000 daltons.

26. Dispersion hybride polymère polyuréthane selon l'une des revendications 1 à 25
**caractérisée en ce que** l'on choisit le composant (H) parmi l'acide acrylique et ses dérivés, l'acide méthacrylique et ses dérivés et/ou le styrène et ses dérivés.

27. Dispersion hybride polymère polyuréthane selon l'une des revendications 1 à 26
**caractérisée en ce que** le composant (H) contient des combinaisons de 75 à 85 % en poids de méthacrylate de méthyle, 5 à 15 % en poids d'acrylate de n-butyle et 10 à 20 % en poids d'autres monomères.

28. Dispersion hybride polymère polyuréthane selon l'une des revendications 1 à 27
**caractérisée en ce que** le composant (H) contient une combinaison de 85 % en poids de méthacrylate de méthyle et 15 % en poids d'acrylate de n-butyle ou une combinaison de 75 % en poids de méthacrylate de méthyle, 15 % en poids d'acrylate de n-butyle et 10 % en poids de styrène.

29. Dispersion hybride polymère polyuréthane selon l'une des revendications 1 à 28
**caractérisée en ce que** le composant (I) comprend un initiateur radicalaire possédant un ou plusieurs groupes azo ou péroxo.

30. Dispersion hybride polymère polyuréthane selon l'une des revendications 1 à 29
**caractérisée en ce que** le composant (I) comprend un initiateur radicalaire qui présente une durée de demi-vie d'une heure dans le cas d'une température de dissociation située dans la plage comprise entre 40 et 120°C, de préférence entre 70 et 90°C.

31. Dispersion hybride polymère polyuréthane selon l'une des revendications 1 à 30
**caractérisée en ce que** le composant (I) comprend du 2,2'-azobisisobutyronitrile.

32. Dispersion hybride polymère polyuréthane selon l'une des revendications 1 à 31
**caractérisée en ce que** la teneur en matières solides du polymère hybride polyuréthane est comprise entre 20 et 60 % en poids, de préférence entre 30 et 50 % en poids, par rapport au poids total de la dispersion hybride polymère polyuréthane.

33. Dispersion hybride polymère polyuréthane selon l'une des revendications 1 à 32
**caractérisée en ce que** le rapport des teneurs proportionnelles en matières solides de résine de polyuréthane et de résine du polymère est de 20 à 80 pour 80 à 20 % en poids, de préférence de 40 à 60 pour 60 à 40 % en poids et de manière particulièrement préférée d'environ 50 pour 50 % en poids.

34. Dispersion hybride polymère polyuréthane selon l'une des revendications 1 à 33
**caractérisée en ce que** la taille moyenne de particule des micelles du polymère hybride polyuréthane est comprise entre 50 et 500 nm, de préférence entre 50 et 250 nm.

35. Dispersion hybride polymère polyuréthane selon l'une des revendications 1 à 34
**caractérisée en ce que** le polymère hybride polyuréthane présente une masse molaire moyenne comprise entre 25 000 et 250 000 daltons.

36. Procédé de fabrication d'une dispersion hybride polymère polyuréthane selon l'une des revendications 1 à 35
**caractérisée en ce que** l'on prépare tout d'abord, à l'étape de réaction (a), une dispersion de base polyuréthane, dans laquelle
(a1) les composants acides gras (A), les composants polyols (B)(i) (B)(ii) et (B)(iii) sont mis à réagir avec un composant polyisocyanate (C), éventuellement en présence d'un composant dessiccateur (D) et d'un composant solvant (E) et, éventuellement, en présence d'un catalyseur afin d'obtenir un prépolymère polyuréthane,
(a2) le prépolymère polyuréthane issu de l'étape (a1) est mélangé à un agent dispersant et au composant de neutralisation (F), puis
(a3) la dispersion prépolymère polyuréthane issue de l'étape (a2) est mise à réagir avec le composant d'allongement de chaîne (G),
ensuite, au cours de l'étape de réaction (b), on prépare une dispersion hybride polymère polyuréthane, en
(b1) mélangeant la dispersion de base polyuréthane issue de l'étape (a3) à un mélange préparé au préalable à partir des composants monomère (H) et initiateur (I), puis
(b2) en réalisant, par dissociation thermique du composant (I), une polymérisation radicalaire du composant (H) à l'intérieur des micelles de la dispersion de base polyuréthane.

37. Procédé selon la revendication 36,
**caractérisé en ce que** l'on prépare en premier lieu, au cours de l'étape de réaction (a), une dispersion de base polyuréthane, dans laquelle
(a1) on fait réagir 0,3 à 12 % en poids du composant acide gras insaturé apte à la dessiccation oxydative (A), 0,5 à 12 % en poids du composant polyol de masse moléculaire élevée (B)(i), 0,5 à 3,0 % en poids du composant polyol de faible masse moléculaire (B)(ii) ainsi que 0,5 à 3,0 % en poids du composant polyol de faible masse moléculaire modifiable au niveau anionique (B) (iii) avec 3,5 à 16 % en poids du composant polyisocyanate (C) en présence, éventuellement, de 0 à 2 % en poids du composant dessiccateur (D) ainsi que de 0 à 6 % en poids du composant solvant (E) en présence, éventuellement, d'un catalyseur afin d'obtenir un prépolymère polyuréthane,
(a2) on mélange le prépolymère polyuréthane issu de l'étape (a1) à l'agent dispersant et à 0,3 à 2,5 % en poids du composant de neutralisation (F), puis
(a3) on fait réagir la dispersion prépolymère polyuréthane issue de l'étape (a2) avec 0,1 à 1,5 % en poids du composant d'allongement de chaîne (G)
ensuite, au cours de l'étape de réaction (b), on prépare une dispersion hybride polymère polyuréthane, en
(b1) mélangeant la dispersion de base polyuréthane issue de l'étape (a3) à un mélange préparé au préalable constitué de 5 à 45 % en poids du composant monomère (H) et de 0,01 à 1,5 % en-poids du composant initiateur (I), puis
(b2) en réalisant, par dissociation thermique du composant (I), une polymérisation radicalaire du composant (H) à l'intérieur des micelles de la dispersion de base polyuréthane.

38. Procédé selon la revendication 37,
**caractérisé en ce que** l'on effectue l'étape de réaction (a1) à une température comprise entre 60 et 120°C, de préférence entre 80 et 100°C.

39. Procédé selon l'une des revendications 36 à 38,
**caractérisé en ce que** le rapport en équivalent NCO/OH des composants (A), (B) et (C) à l'étape de réaction (a1) est ajusté à une valeur comprise entre 1,2 et 2,0, de préférence entre 1,4 et 1,8.

40. Procédé selon l'une des revendications 36 à 39,
**caractérisé en ce que** l'on réalise l'étape de réaction (a1) en présence de 0,01 à 1 % en poids, par rapport aux composants (A), (B), (C), (D) et (E) d'un catalyseur approprié pour des réactions de polyaddition de polyisocyanates.

41. Procédé selon l'une des revendications 36 à 40,
**caractérisé en ce que** le composant dessiccateur (D) n'est mis dans l'agent dispersant qu'à l'étape de réaction (a2).

42. Procédé selon l'une des revendications 36 à 41,
**caractérisé en ce qu'**il se produit une neutralisation directe du composant (B) (iii), dans laquelle le composant de neutralisation (F) est délayé dans le prépolymère polyuréthane dès la fin de l'étape de réaction (a1).

43. Procédé selon l'une des revendications 36 à 41,
**caractérisé en ce qu'**il se produit une neutralisation indirecte du composant (B) (iii), dans laquelle on met en oeuvre au stade (a2) un agent dispersant contenant le composant de neutralisation (F).

44. Procédé selon l'une des revendications 36 à 43,
**caractérisé en ce que** l'étape de réaction (a2) s'effectue à une température comprise entre 30 et 60°C, de préférence entre 40 et 50°C.

45. Procédé selon l'une des revendications 36 à 44,
**caractérisé en ce que** l'on ajoute le composant (F) dans une quantité telle que le degré de neutralisation par rapport aux groupes carboxyliques libres du prépolymère polyuréthane se situe entre 70 et 100 % en équivalent, de préférence entre 90 et 100 % en équivalent.

46. Procédé selon l'une des revendications 36 à 45,
**caractérisé en ce que** l'étape de réaction (a3) s'effectue à une température comprise entre 20 et 60°C, particulièrement entre 30 et 50°C.

47. Procédé selon l'une des revendications 36 à 46,
**caractérisé en ce que** l'on ajoute le composant (G) à l'étape de réaction (a3) dissous dans l'agent dispersant.

48. Procédé selon l'une des revendications 36 à 47,
**caractérisé en ce que** l'on ajoute le composant (G) dans une quantité telle que le taux d'allongement de chaîne par rapport aux groupes isocyanates libres du prépolymère polyuréthane se situe entre 50 et 100 % en équivalent, de préférence entre 60 et 90 % en équivalent.

49. Procédé selon l'une des revendications 36 à 48,
**caractérisé en ce que** l'étape de réaction (b1) s'effectue à une température comprise entre 15 et 35°C, de préférence entre 20 et 30°C.

50. Procédé selon l'une des revendications 36 à 49,
**caractérisé en ce que** le rapport molaire initiateur/monomère des composants (H) et (I) est ajusté à des valeurs comprises. entre 0,001 et 0,05 % en mole, de préférence à 0,008 % en mole.

51. Procédé selon l'une des revendications 36 à 50,
**caractérisé en ce que** l'étape de réaction (b2) est effectuée à une température qui se situe dans une plage de ± 10°C par rapport à la température à laquelle le composant (I) présente une durée de demi-vie d'une heure.

52. Procédé selon l'une des revendications 36 à 51,
**caractérisé en ce que** la polymérisation s'effectue à l'étape (b2) sans autre émulsifiant.

53. Procédé selon l'une des revendications 36 à 52,
**caractérisé en ce que** l'étape de réaction (b2) s'effectue à une température de 80 à ± 10°C, sachant que l'on emploie du 2,2'-azobisisobutyronitrile en tant que composant (I).

54. Utilisation de dispersion hybride polymère polyuréthane selon l'une des revendications 1 à 35 en tant que liant pour des laques à un ou deux composants, des vitrifications, des collages et des revêtements de surface de matériaux de construction minéraux, tels que, par exemple, le béton, le bois et les matériaux dérivés du bois, le métal et les matières plastiques.
